# EUROPÄISCHE PATENTANMELDUNG

(11) **EP 4 825 573 A1**
(43) Veröffentlichungstag der Anmeldung: **21.10.2026**
(21) Anmeldenummer: 25170518.2
(22) Anmeldetag: 14.04.2025
(51) Int. Cl.: B32B 1/08, B29C 63/34, B32B 7/12, B32B 27/08, B32B 27/32, B32B 27/34, F16L 55/165, B32B 38/00

(54) **AUSKLEIDUNGSSCHLAUCH ZUR SANIERUNG VON DEFEKTEN KANALROHREN UND VERFAHREN ZUR HERSTELLUNG**

(71) Anmelder: Brandenburger Liner GmbH & Co. KG, 76829 Landau/Pfalz (DE); InnoVance GmbH, 10719 Berlin (DE)
(72) Erfinder: Foerster, Gerrit, 76756 Bellheim (DE)
(74) Vertreter: Simandi, Claus

(57) **Zusammenfassung**

Die Erfindung betrifft einen Auskleidungsschlauch zur Sanierung von defekten Kanalrohren und ein Verfahren zur Herstellung sowie zur Installation eines solchen und dessen Verwendung.

## Beschreibung

Die Erfindung betrifft einen Auskleidungsschlauch zur Sanierung von defekten Kanalrohren und ein Verfahren zur Herstellung sowie zur Installation eines solchen und dessen Verwendung.

Auf dem Gebiet der grabenlosen Sanierung von defekten Rohrleitungen, wie z.B. defekten Abwasserkanälen, werden zunehmend Auskleidungsschläuche eingesetzt, die eine oder mehrere Lagen aus einem mit einem flüssigem Reaktionsharz getränkten Glasfaserlaminat aufweisen, welches in Form von überlappend gewickelten oder gelegten Faserbändern um einen Innenfolienschlauch herum angeordnet ist. Auf der Außenseite ist das Laminat von einem Außenfolienschlauch umgeben, der einen Austritt von schädlichen Substanzen, insbesondere von Styrol, aus dem Reaktionsharz in das Erdreich verhindert. Die Auskleidungsschläuche, die auch als Inliner bezeichnet werden, werden in einen zu sanierenden Kanal eingezogen, nach dem Einziehen an ihren Enden mit Hilfe von Packern verschlossen und mittels Druckluft expandiert und durch Licht einer UV-Strahlungsquelle, oder alternativ durch Einleiten von Heißdampf, ausgehärtet.

Ein zuvor genannter Auskleidungsschlauch sowie ein Verfahren zur Herstellung eines solchen sind beispielsweise aus der WO-A 95/04646 bekannt.

In den letzten Jahren ist das Schlauchlining-Verfahren für die Rohrsanierung, insbesondere die grabenlose Kanalrohrsanierung oder die Druckrohrsanierung, wegen seiner unbestrittenen Vorteile hinsichtlich Aufwand und Kosten mehr und mehr in den Fokus gerückt. Bei der grabenlosen Kanalsanierung ist es beispielsweise beim System Glasfaser-Einlegeschlauch mit UV- oder Dampfhärtung bekannt, in das zu sanierende Rohr zuerst eine dickwandige Folie aus Polyethylen (PE) mit einer hohen Dichte (HDPE - High Density Polyethylene) als Gleitfolie einzubringen, welche - zumeist in der Querschnittsform eines Halbkreises - an der Innenwand des Rohres angelegt wird. Anstelle einer Gleitfolie wird - insbesondere beim System Synthesefaser-Einlegeschlauch mit Warmwasser- oder Dampfhärtung - ein Preliner (auch Preliner-Folie genannt) in das zu sanierende Rohr eingebracht. Ein Preliner, der üblicherweise ebenfalls aus HDPE besteht, ist eine dickwandige, das Rohr vollständig auskleidende Folie, die ebenfalls einen direkten Kontakt des Einlegeschlauchs mit der Rohrinnenwand verhindert, indem der Preliner an der Innenwand des Rohres angelegt wird.

Nach der (optionalen) Verlegung einer Gleitfolie oder eines Preliners wird ein flexibler, als Schlauchfolie ausgebildeter Einlegeschlauch oder Auskleidungsschlauch, auch als Schlauchliner bezeichnet, in das Rohr eingezogen (Einzugsverfahren) oder invertiert (Inversionsverfahren), wobei der Einlegeschlauch über die Gleitfolie bzw. den Preliner gleitet. Hierdurch wird einerseits eine Beschädigung des Einlegeschlauchs durch die Rohrinnenwand bzw. Gegenstände im Rohr vermieden, andererseits ist die Reibung zwischen Einlegeschlauch und Gleitfolie bzw. Preliner sehr niedrig, was das Einziehen des Einlegeschlauchs erleichtert.

Ein derartiger Einlegeschlauch weist beim System Glasfaser-Einlegeschlauch mit UV- oder Dampfhärtung üblicherweise einen als Schlauchfolie ausgebildeten äußeren Schlauch (Schlauchaußenfolie) und einen als Schlauchfolie ausgebildeten inneren Schlauch (Schlauchinnenfolie) auf, zwischen denen ein Trägermaterial, beispielsweise Glasfasern oder Nonwovens, eingebracht ist, welches mit reaktivem Kunststoffharz getränkt ist (Harz-Trägersystem). Als reaktive Kunststoffharze kommen zum Beispiel handelsübliche UP-Harze (Polyester- bzw. ungesättigte Polyesterharze), VE-Harze (Vinylesterharze) oder EP-Harze (Epoxid-Harze) zum Einsatz. Das reaktive Kunststoffharz ist vorzugsweise ein ungesättigtes Polyesterharz (UP-Harz) mit α, ß-ungesättigten Monomeren, wie z.B. Styrol. Handelsübliche Harze sind beispielsweise ungesättigte Polyesterharze des Typs 1140 nach Tabelle 3 von DIN 16 946-2 entsprechend der Gruppe 3 in Tabelle 1 von DIN 18 820. Die Härtung der Harze erfolgt bei UP- oder VE-Harzen zum Beispiel mit Hilfe von Photoinitiatoren. Die Härtung kann aber auch thermisch erfolgen. Der Einlegeschlauch wird im Rohr durch gegen die mechanisch stabile Schlauchinnenfolie gerichtete Druckluft von innen her so lange aufgeblasen, bis die Schlauchaußenfolie an der Rohrinnenwand bzw. der Gleitfolie bzw. dem Preliner anliegt, d.h. der Einlege- oder Auskleidungsschlauch wird "aufgestellt", um anschließend das Harz - beispielsweise mittels UV-Licht aus einer langsam durch das Innere des aufgeblasenen Einlegeschlauchs gezogenen UV-Lichtquelle - auszuhärten. Je nach Ausführungsform der Schlauchinnenfolie des Einlegeschlauchs verbleibt diese im Rohr oder wird abgezogen und entfernt.

Um eine ungewollte, vorzeitige Aushärtung des Kunststoffharzes vor dem Einbringen in das zu sanierende Rohr zu verhindern (insbesondere bei der Lagerung), ist es notwendig, dass die Schlauchaußenfolie des Einlegeschlauchs eine Schutzschicht aufweist oder aus einer Schutzschicht besteht, die eine vorzeitige Einwirkung von UV-Strahlung oder kürzerwelliger Strahlung sichtbaren Lichts auf das Harz und damit eine vorzeitige Harzhärtung verhindert. Die Schlauchinnenfolie eines solchen Einlegeschlauchs muss hingegen eine sehr gute Durchlässigkeit gegenüber UV-Strahlung und kürzerwelliger Strahlung sichtbaren Lichts aufweisen. Damit wird der Aushärtungsvorgang ermöglicht, der beim im Rohr aufgeblasenen Einlegeschlauch durch eine Strahlungsquelle vorgenommen wird, die an der Innenseite des Einlegeschlauchs, also innerhalb der Schlauchinnenfolie, hindurchgezogen wird.

Aus dem Stand der Technik ist es bekannt, einerseits die Schlauchaußenfolie oder die Schlauchinnenfolie auf der jeweils der dem harzgetränkten Trägermaterial zugewandten Seite mit einem Vlies aus z.B. Fasern aus Polyethylen, Polypropylen, Polyester, Polyamid zu kaschieren. Die mit Harz getränkten Glasfasern, die das Trägermaterial darstellen, oder Bänder, die mit Harz getränkt sind und im Wickelverfahren auf die Schlauchfolie aufgebracht werden, kommen hierbei in Kontakt mit dem Vlies (Nonwoven). Hierdurch gelangt das Harz auch an und in das Vlies, das auf die Folien kaschiert ist, und kann sich so fest und praktisch untrennbar mit dem Vlies verbinden. Weiterhin hat die Verwendung eines Vlieses den Vorteil, dass auf diese Weise überschüssige Luft aus dem System entfernt werden kann, da sich die Glasfasern mit dem Harz an das Vlies anlegen, wobei bei diesem Vorgang Luft verdrängt wird.

In der EP 0 342 897 A2 ist eine mehrschichtige Folie beschrieben, die eine Polyamid-Schicht als eine erste und eine Ionomer-Siegelschicht als eine zweite äußere Schicht aufweist, wobei eine Haftvermittlerschicht zwischen diesen beiden Außenschichten vorgesehen ist. Beim Einsatz in der Rohrsanierung wird die Polyamid-Schicht durch Erwärmen mit einem faserartigen Vlies verbunden und dieses dann mit einem aushärtbaren Harz getränkt. Nach Einbringung in ein zu sanierendes Rohr und nach Aushärtung des Harzes mittels UV-Strahlung werden die beiden Enden über die Ionomer-Siegelschicht miteinander versiegelt. Nachteilig an einer gemäß EP 0 342 897 A2 offenbarten mehrschichtigen Folie ist, dass diese zumindest im Bereich der Siegelnaht eine Schwachstelle aufweist.

Die neueren Schlauchinnenfolien haben hingegen häufig eine Polyethylen-Schicht als erste äußere Schicht, die im eingebauten Zustand ins Innere des sanierten Rohres weist (in Richtung des zu transportierenden Mediums), und eine Polyamid-Schicht als zweite äußere Schicht, die im eingebauten Zustand zur Rohrwandung des sanierten Rohres weist. Polyamid weist einen sehr hohen Verschleißwiderstand auf, besitzt eine hohe Festigkeit, Steifigkeit und Zähigkeit und außerdem eine gute Chemikalienbeständigkeit. Bei einer Schlauchinnenfolie dient das Polyamid insbesondere als Barriere gegenüber Monomeren wie beispielsweise Styrol.

Schlauchfolien werden bevorzugt durch die sogenannte Blasfolienextrusion auf Blasfolienextrusionsanlagen hergestellt. Bei diesem Prozess findet nach der Extrusion und dem Austritt der Polymerschmelze aus einer Ringdüse und dem Aufblasen der Schmelze zu einer Blase sowie nach der Abkühlung der so hergestellten Schlauchfolie die sogenannte Flachlegung (durch Abquetschwalzen) statt, nach der die Schlauchfolie wie eine Flachfolie aufgewickelt wird. Dabei wird auch die in der Blase enthaltene Luft praktisch vollständig herausgepresst. Bei dieser Flachlegung bilden sich zwei Kanten an den äußeren Begrenzungen der Schlauchbreite, was mit diesem Verfahren unvermeidbar ist. Man kann die Bildung von Kanten bei einer Schlauchfolie in etwa mit dem Falten eines Papiers vergleichen.

Es hat sich gezeigt, dass sich bei Schlauchinnenfolien und auch bei den (Schlauch)Außenfolien bei deren Flachlegung im Zuge der oben beschriebenen Herstellung bzw. auch bei deren flacher Lagerung, d.h. vor dem Einbau in ein zu sanierendes Rohr, im Bereich ihrer geknickten Kanten mechanische Schwachstellen, zum Beispiel (Mikro)Löcher, bilden, die beim Aufblasen der Folie zu Rissen und noch größeren Löchern in der Schlauchinnenfolie oder in der (Schlauch)Außenfolie führen können. Die Ursache für die Entstehung dieser Schwachstellen liegt vermutlich darin, dass die Kanten im Verlauf der Lagerung - ggf. aufgrund des durch mechanischen Druck ausgeübten Fließens - dünner werden. Insbesondere im Falle der Herstellung der Schlauchinnenfolien durch Blasfolienextrusion hat sich herausgestellt, dass die Knickkanten bei Lagerung mit der Zeit mehr und mehr ausdünnen. Die Folge ist dann ein früheres Reißen an den somit entstehenden Schwachstellen.

Um beim Expandieren bzw. "Aufstellen" der Auskleidungsschläuche ("Schlauchliner") eine bestmögliche Anlage derselben an die Kanalinnenwände zu erhalten, welche die Grundvoraussetzung für eine hohe maximale mechanische Belastbarkeit darstellt, werden diese üblicherweise mit einem Außendurchmesser gefertigt, der 5 bis 10 % kleiner als der Innendurchmesser DN des zu sanierenden Kanalrohrs ist. Dieses geringfügige Untermaß führt aufgrund der zusätzlichen Dehnung des Auskleidungsschlauchs beim Expandieren zu einer verbesserten Oberflächengüte des ausgehärteten Laminats und erlaubt es, geringfügige Durchmesseränderungen eines Kanalrohrs auszugleichen. Eine Dehnbarkeit von mehr als 10 % ist bei den bekannten Auskleidungsschläuchen des Standes der Technik, wie beispielsweise denen der WO-A 95/04646, bisher hingegen nicht möglich, da sich hierdurch die Gefahr ergibt, dass die empfindliche transparente Innenfolie überdehnt und beschädigt wird, sodass die beim Expandieren eingeleitete Druckluft durch die beschädigte Innenfolie hindurch in das Laminat austritt und das flüssige Reaktionsharz an der entsprechenden Stelle ausbläst. Dies führt nach dem Aushärten des Reaktionsharzes in der Regel zu einer mechanischen Schwachstelle und Undichtigkeit, die, wenn überhaupt, nur mit großem Aufwand ermittelt und beseitigt werden kann.

Auf der anderen Seite ist es jedoch in der Praxis problematisch, die zuvor beschriebenen Auskleidungsschläuche mit einem Durchmesser zu fertigen, der größer als der Innendurchmesser des zu sanierenden Kanalrohres ist, da das Laminat und der Außenfolienschlauch in diesem Falle Falten schlagen, die im sanierten Kanal unerwünscht sind und die bei der Aushärtung mittels UV-Licht zu einer Schattenbildung führen, welche bei größeren Wanddicken eine vollständige Durchhärtung des Reaktionsharzes verhindert.

Aus den zuvor genannten Gründen wurden bei der Sanierung von Rohrleitungen mit einem Durchmesser DN zwischen 150 mm und 1200 mm mehr als 40 verschiedene Grund-Typen von Auskleidungsschläuchen mit einem jeweiligen Nenndurchmesser DN und einem jeweils speziell gefertigten Innenfolienschlauch benötigt, um für jeden Kanaldurchmesser einen optimal angepassten Auskleidungsschlauch bereitzustellen, der nach dem Einziehen, Expandieren und Aushärten eine maximale mechanische Festigkeit und Dichtheit garantiert. Es versteht sich, dass das Vorhalten einer entsprechenden Anzahl von in der Regel nahtlosen Innenfolienschläuchen, sowie die auf diesen aufbauende individuelle Fertigung des Laminats mit einem entsprechenden Durchmesser einen großen logistischen Aufwand darstellt, der die Produktion der Auskleidungsschläuche teuer macht.

Außerdem wird damit die Flexibilität bezüglich der Bedienung von Kundenanfragen erheblich eingeschränkt: Falls ein Auskleidungsschlauch mit einem passenden DN nämlich nicht vorrätig ist, so ist dieser erst herzustellen, was eine gewisse Zeit braucht. Für den Fall, dass aber ein Auskleideschlauch für einen etwas niedrigeren DN schon vorhanden wäre, ist es von sehr großem Vorteil, wenn dieser auch für den vom Kunden gewünschten höheren DN eingesetzt werden könnte.

Eine weitere Unzulänglichkeit der bekannten Auskleidungsschläuche ist darin zu sehen, dass Kanalrohre, bei denen sich der Innendurchmesser in einer sogenannten Haltung beispielsweise von DN 300 mm auf DN 400 mm sprunghaft ändert, mit den zuvor im Stand der Technik beschriebenen bekannten Auskleidungsschläuchen nur mit großen Unsicherheiten, bzw. mit großem Aufwand durch Einziehen und Verbinden zweier separater Auskleidungsschläuche mit einem entsprechenden Durchmesser auskleiden lassen.

Aus der WO2022/128218A1 ist ein Auskleidungsschlauch bekannt, der einen Innenfolienschlauch sowie eine um diesen herum angeordnete, radial aufweitbare Lage aus hochdehnbarem Fasermaterial besitzt, welches mit einem härtbaren Reaktionsharz getränkt ist. Der Auskleidungsschlauch überkommt die zuvor erwähnten Unzulänglichkeiten dadurch, dass der Innenfolienschlauch einen sich in Längsrichtung desselben erstreckenden Verbindungsabschnitt aufweist, welcher zwei parallel zueinander verlaufende Umfangsabschnitte des Innenfolienschlauchs zu einem umfänglich geschlossenen Innenfolienschlauch mit einem definierten Nenndurchmesser verbindet, und dass der Verbindungsabschnitt eine sich entlang des Innenfolienschlauchs erstreckende Sollbruchstelle besitzt, die durch Einbringen eines Druckmediums in den Innenfolienschlauch in Umfangsrichtung auftrennbar ist, um den Innenfolienschlauch und die darauf angeordnete Lage aus Fasermaterial radial über den Nenndurchmesser hinaus aufzuweiten. Obgleich der Auskleidungsschlauch einen großen Bereich von Leitungsdurchmessern abdeckt, ist dessen Fertigung und Handhabung vergleichsweise aufwändig.

Nachteilig bei allen oben genannten, bisher im Stand der Technik als Schlauchinnenfolie verwendeten PE/PA- oder PE/HV/PA-Folien ist unter anderem deren zu geringe mechanische Festigkeit und unzureichende Dehnfähigkeit.

Im schlimmsten Fall führen ungenügende mechanische Eigenschaften der Schlauchinnenfolie zu einem Platzen der Folie, wenn die als Schlauch ausgebildete Schlauchinnenfolie des Einlegeschlauchs (Schlauchliner) aufgeblasen wird.

Analoges gilt für die bisher im Stand der Technik beschriebenen Schlauchaußenfolien, die für die Herstellung von Auskleidungsschläuchen verwendet werden. Hier ist bisher die Dehnfähigkeit ebenfalls ungenügend.

Wenn aber die Folien (Innen- und Außenfolien) bereits über eine unzureichende Dehnfähigkeit und mangelnde mechanische Festigkeit verfügen (und diese zudem noch instabil gegenüber Witterungseinflüssen sind und insbesondere bei niedrigen Temperaturen um oder unter dem Gefrierpunkt versagen), kann mit solchen Folien kein Auskleidungsschlauch zur Verfügung gestellt werden, der über eine derart hohe Dehnfähigkeit verfügt, dass damit auch größere Dimensionssprünge bei verschiedenen Durchmessern DN in zu sanierenden Kanälen repariert oder saniert werden können. Denn dafür müssen alle im Schlauchliner enthaltenen Folien, sowohl die Schlauchinnen- als auch die Schlauchaußenfolie - insbesondere in Kontakt mit den harzgetränktem Trägermaterial - über eine sehr hohe Dehnbarkeit bei Aufrechterhaltung der hohen mechanischen Festigkeiten verfügen, die zudem nicht von äußeren Einflüssen wie etwa der Witterung (z.B. der Temperatur und der Luftfeuchtigkeit) negativ beeinflusst werden.

Demgemäß ist es eine Aufgabe der vorliegenden Erfindung, einen einfach zu handhabenden und kostengünstig zu fertigenden Auskleidungsschlauch bereitzustellen, welcher es ermöglicht, Kanalrohre mit jeweils unterschiedlichen Innendurchmessern oder mit sich über die Länge des Kanalrohres hinweg ändernden Innendurchmessern sowie auch Kanalschächte mit ein und demselben Auskleidungsschlauch zu sanieren.

Mithin, es ist die Aufgabe der vorliegenden Erfindung, auch sogenannte "Dimensionssprünge" beim Durchmesser DN des zu sanierenden Kanalrohrs mittels der Schlauchlinertechnologie einer einfachen Reparatur zuzuführen, bzw. diese Reparatur in einer möglichst einfachen Art und Weise zu ermöglichen.

Diese Aufgabe wird erfindungsgemäß durch einen Auskleidungsschlauch zumindest mit den Merkmalen von Anspruch 1 gelöst.

Eine weitere Aufgabe der Erfindung ist es, ein Verfahren bereitzustellen, mit welchem sich ein solcher Auskleidungsschlauch in einem zu sanierenden Kanal installieren lässt. Diese Aufgabe wird erfindungsgemäß durch ein Verfahren mit den Merkmalen von Anspruch 11 gelöst.

Weitere Merkmale der Erfindung sind in den Unteransprüchen beschrieben.

Daher betrifft die Erfindung einen Auskleidungsschlauch zur Sanierung eines defekten Kanalrohres oder Kanalschachts, umfassend einen Innenfolienschlauch, eine um diesen herum angeordnete, mit einem härtbaren Reaktionsharz getränkte schlauchförmige Lage aus einem Trägermaterial,
wobei der Innenfolienschlauch eine Mehrschichtenfolie aufweist, die mindestens eine Schicht aus einem oder mehreren Homo- oder Copolymeren von Polyolefinen (nachstehend auch *Polyolefinschicht* genannt) und mindestens eine auf diese angeordnete Barriereschicht aus einem oder mehreren Homo- oder Co-Polyamiden (nachstehend auch *Polyamidschicht (PA)* genannt) umfasst,
wobei,
die Barriereschicht aus einem oder mehreren Homo- oder Co-Polyamiden mindestens ein Polyblockamid enthält,
   und / oder
die Schicht aus einem oder mehreren Homo- oder Copolymeren von Polyolefinen ganz oder teilweise mindestens ein Metallocen Linear Low Density Polyethylen (m-LLDPE) enthält, wobei die Barriereschicht aus einem oder mehreren Homo- oder Copolymeren unmittelbar an der Lage aus einem Trägermaterial angeordnet ist (nachstehend erfindungsgemäßer Innenfolienschlauch).

Nach dem der Erfindung zugrunde liegenden Gedanken ist ein im Querschnitt kreisförmiger, im expandierten Zustand zylindrischer Auskleidungsschlauch so ausgestaltet, dass er sich beim Expandieren an die unterschiedlichen Durchmesser eines Kanalrohres anpassen kann. Dies ermöglicht vorteilhaft, den Auskleidungsschlauch, wie in der WO-A 95/04646 beschrieben, als endlosen Schlauch zu fertigen und auf die Baustelle zu transportieren.

Der Auskleidungsschlauch umfasst hierzu einen Innenfolienschlauch, auf welchem zum Beispiel wenigstens eine Lage eines schraubenförmig gewickelten oder alternativ auch umfänglich gelegten Trägermaterials, insbesondere Faserbandes, insbesondere eines Glasfaserbandes oder Glasfaservlieses angeordnet ist, welches mit einem flüssigen Reaktionsharz getränkt ist, das bevorzugt durch UV-Licht ausgehärtet werden kann. Darauf folgt bevorzugt ein Glasfaserband (Längszugband) mit in Längsrichtung des Auskleidungsschlauchs orientierten Glasfasern, insbesondere Glasfaserrovings, welches die Zugkräfte beim Einbau des nachfolgend auch als "Liner" bezeichneten Auskleidungsschlauchs in ein Kanalrohr oder einen Kanalschacht abträgt.

Der erfindungsgemäße Innenfolienschlauch 10 (auch "Schlauchinnenfolie" oder nur "Innenfolie" genannt) ist bevorzugt nahtlos aus einer Mehrschichtfolie oder Verbundfolie geformt, die - in ihrer einfachsten Form - eine erste innere Lage aus einem Polyolefin (Polyolefinschicht), insbesondere aus Polyethylen (PE) und eine auf dieser angeordnete Barrierelage aus Polyamid (PA) (Polyamidschicht) umfasst, welche über eine Verbindungsschicht, vorzugsweise einen Haftvermittler (HV), miteinander verbunden sind. Es können erfindungsgemäß mehrere Schichten in den erfindungsgemäßen Mehrschichtfolien enthalten sein, so mindestens eine Schicht, die überwiegend aus Polyethylen PE besteht, mindestens eine Haftvermittlerschicht HV und mindestens eine Polyamid-Schicht PA.

Zur Herstellung der mindestens einen Polyamidschicht PA in den erfindungsgemäßen Mehrschichtfolien, die sowohl als Schlauchinnenfolie als auch als Schlauchaußenfolie in Frage kommen, eignet sich mindestens ein Homo- und/oder Copolyamid. Geeignete Homo- oder Copolyamide sind vorzugsweise ausgewählt aus der Gruppe thermoplastische aliphatische, teilaromatische oder aromatische Homo- oder Copolyamide. Diese Homo- oder Copolyamide können aus Diaminen, solche wie aliphatische Diamine mit 2-10 Kohlenstoffatomen, insbesondere Hexamethylendiamin, und/oder aromatische Diamine mit 6-10 Kohlenstoffatomen, insbesondere p-Phenylendiamin und/oder aus aliphatischen Dicarbonsäuren und/oder aromatischen Dicarbonsäuren mit 6-14 Kohlenstoffatomen, solche wie Adipinsäure, Terephthalsäure oder Isoterephthalsäure und/oder aus Lactamen mit 4-10 Kohlenstoffatomen, wie z.B. aus ε-Caprolactam ausgewählt sein.

Vorzugsweise werden die Polyamide PA 6, PA 11, PA 12, PA 66, PA 6,10, PA 6,12, PA 666, PA 6I, PA 6T oder entsprechende Co-Polymere oder Mischungen aus mindestens zwei der genannten Polyamide erfindungsgemäß verwendet.

Die Polyamidschicht der erfindungsgemäßen Mehrschichtfolien weist vorzugsweise eine Schichtdicke von 5 µm bis 200 µm, besonders bevorzugt von 15 µm bis 90 µm und am meisten bevorzugt von 20 µm bis 60 µm, auf.

Zur Herstellung der mindestens einen Haftvermittlerschicht (HV) der erfindungsgemäßen Mehrschichtfolien können übliche Haftvermittler eingesetzt werden, die dem Fachmann geläufig sind, z.B. ein modifiziertes thermoplastisches Polymer, vorzugsweise insbesondere ein modifiziertes Olefin-Homo- oder Copolymer. Die Modifizierung erfolgt vorzugsweise mit mindestens einer organischen Säure oder mindestens einem vorzugsweise zyklischen organischen Säureanhydrid, vorzugsweise mit Maleinsäureanhydrid (MSA oder MAH). Es können ebenfalls andere funktionelle Gruppen in die Olefin-Homo- oder Copolymere eingebracht werden, sodass diese modifizierten Polymere erfolgreich als Haftvermittler wirken.

Insbesondere sind solche funktionellen Gruppen, wie nicht abschließend, Acrylat-, Alkohol-, Acetat- oder Epoxid-Gruppen geeignet.

Die Schichtdicke der Haftvermittlerschicht der erfindungsgemäßen Mehrschichtfolien liegt vorzugsweise zwischen 1 µm bis 50 µm, besonders bevorzugt zwischen 2 µm bis 20 µm.

Zur Herstellung der mindestens einen Polyolefinschicht, insbesondere Polyethylen-Schicht (PE) der erfindungsgemäßen Mehrschichtfolien kann mindestens ein thermoplastisches Olefin-Homo- oder Copolymer eingesetzt werden, beispielsweise solche von α,β-ungesättigten Olefinen mit 2-10 Kohlenstoffatomen. Es eignen sich hierbei vorzugsweise Ethylen-Homopolymere (Polyethylene, PE), vorzugsweise LDPE (Polyethylen hoher Dichte im Bereich von 0,86-0,93 g/cm³), LLDPE (Linear Low Density Polyethylene), HDPE (Polyethylen hoher Dichte im Bereich von 0,94 und 0,97 g/cm³) und mPE (auf Basis von Metallocen-Katalysatoren polymerisierte PE), Propylen-Homopolymere (Polypropylene, PP), Butylen-Homopolymere (Polybutylene, PB) und Isobutylen-Homopolymere (Polyisobutylene, PI) oder Mischungen aus mindestens zwei der genannten Polymere.

Im Rahmen dieser Erfindung hat sich herausgestellt, dass sich die besten mechanischen Eigenschaften der erfindungsgemäßen Mehrschichtfolien vorzugsweise ergeben, wenn in der mindestens einen Polyolefinschicht, insbesondere PE-Schicht, ganz oder teilweise ein mLLDPE-(Co-)Polymer zu einem Anteil von vorzugsweise mindestens 30 Gew.-% enthalten ist.

Die Schichtdicke der mindestens einen Polyolefinschicht der erfindungsgemäßen Mehrschichtfolie mit einem Anteil an mLLDPE von vorzugsweise mindestens 30 Gew.-% beträgt vorzugsweise 10 µm bis 500 µm, besonders bevorzugt 20 µm bis 400 µm, ganz besonders bevorzugt 30 µm bis 300 µm und am meisten bevorzugt 40 µm bis 200 µm.

Die Schichtdicke der mindestens einen Polyolefinschicht der erfindungsgemäßen Mehrschichtfolie mit einem Anteil an mLLDPE von vorzugsweise mindestens 30 Gew.-% beläuft sich bevorzugt auf mindestens 15 % der Gesamtschichtdicke der Mehrschichtfolie, vorzugsweise auf mindestens 25 % und besonders bevorzugt auf 30 % bis 95 %.

Einzelne oder alle Schichten der erfindungsgemäßen Mehrschichtfolien können, wenn vorteilhaft oder notwendig, jeweils unabhängig voneinander Zusatzstoffe enthalten. Diese können ausgewählt sein aus der Gruppe umfassend Antistatika, Antioxidantien, Oxygen Scavenger, Antiblockmittel, Antifogmittel, antimikrobielle Wirkstoffe, Farbstoffe, Farbpigmente, Stabilisierungsmittel, vorzugsweise Hitze-Stabilisatoren, Prozess-Stabilisatoren, Prozesshilfsmittel, Flammschutzmittel, Nukleierungsmittel, Kristallisationsmittel, vorzugsweise Kristallkeimbildner, Gleitmittel, optische Aufheller, Flexibilisierungsmittel, Siegelmittel, Weichmacher, Silane, Abstandshalter, Füllstoffe, Peel-Additive, Wachse, Benetzungsmittel, oberflächenaktive Verbindungen, vorzugsweise Tenside, UV-Stabilisatoren, und Dispergiermittel. Der Anteil an Zusatzstoffen in den Schichten kann mindestens 0,01-20 Gew.-%, vorzugsweise mindestens 0,1-10 Gew.-% (jeweils bezogen auf das Gesamtgewicht einer einzelnen Schicht) betragen.

Die Gesamtschichtdicke der erfindungsgemäßen Mehrschichtfolie liegt vorzugsweise zwischen 20 bis 2000 µm, besonders bevorzugt zwischen 50 bis 1500 µm, ganz besonders bevorzugt zwischen 70 bis 1000 µm, insbesondere zwischen 80 bis 400 µm.

Um die erfindungsgemäße Mehrschichtfolie vorteilhafterweise als Innenschlauchfolie bei der Rohrsanierung mittels der Schlauchlinertechnologie zu verwenden (s.o.), ist sie vorteilhafterweise zumindest teilweise für UV-Strahlung, d.h. elektromagnetische Strahlung in einem Wellenlängenbereich von 200 bis 450 nm, durchlässig, vorzugsweise zu mindestens 60 %, besonders bevorzugt zu mindestens 80 % und am meisten bevorzugt zu mindestens 90 %. Hier kommt es also auf eine besonders hohe Transmission für UV- und (kurzwelliges) sichtbares Licht im Wellenlängenbereich von 200 bis 450 nm an. Eine UV-Quelle kann dann durch die erfindungsgemäße Mehrschichtfolie, hier durch die Schlauchinnenfolie, hindurch effektiv auf das vorzugsweise mit reaktivem Harz getränkte Trägermaterial einwirken, um es im Zuge der Linerinstallation auszuhärten.

In einer bevorzugten Ausführungsform ist die erfindungsgemäße Mehrschichtfolie nicht nur zumindest teilweise durchlässig für UV-Strahlung, sondern - aus dem gleichen Grund wie oben - zudem zumindest teilweise durchlässig für kurzwelliges, sichtbares Licht (d.h. elektromagnetische Strahlung in einem Wellenlängenbereich von 400 bis 500 nm, vorzugsweise von 400 bis 450 nm), vorzugsweise zu mindestens 80 %, besonders bevorzugt zu mindestens 90 %.

Im Gegensatz dazu ist die erfindungsgemäße Mehrschichtfolie als Schlauchaußenfolie allerdings weitgehend UV- und lichtdicht, so wie es bei den in der DE 10 2009 041 841 beschriebenen Außenfolien gegeben sein muss. In diesem Fall absorbiert oder reflektiert die Außenfolie sowohl UV- als auch (kürzerwelliges) sichtbares Licht zu über 90 %, bevorzugt zu über 99 %. Demnach stellt die erfindungsgemäße Außenfolie eine UV- und Lichtschutzfolie dar, um zu verhindern, dass das harzgetränkte Trägermaterial bereits durch Einwirken von elektromagnetischer Strahlung von außen - etwa durch Sonnenlicht - vorzeitig aushärtet. Denn dies würde den erfindungsgemäßen Auskleidungsschlauch, der mit den erfindungsgemäßen Mehrschichtfolien erhalten wird, unbrauchbar machen. Der erforderliche UV- und Lichtschutz wird bei den erfindungsgemäßen Außenfolien für die erfindungsgemäßen Auskleidungsschläuche durch Zugabe zum Beispiel von Farbpigmenten und/oder von UV-Absorbern erreicht. Je nach Konzentration c dieser Additive und je nach Schichtdicke d, in der diese Additive jeweils eingebracht werden, kann dann aufgrund des Lambert-Beer'schen Gesetzes die gewünschte Absorption bzw. die gewünschte Extinktion elektromagnetischer Strahlung eingestellt werden.

Die erfindungsgemäßen Mehrschichtfolien können als Schlauchfolie durch (Co)-Extrusion, besonders bevorzugt durch Blasfolien-(Co)-Extrusion, hergestellt werden, vorzugsweise ohne Siegelnaht. Alternativ kann die erfindungsgemäße Mehrschichtfolie in Form einer Schlauchfolie als Cast-Folie durch Cast-(Co)-Extrusion erhalten werden oder als sonstige Flachfolie. Solche Folien können dann zu einem Schlauch versiegelt werden. Eine Prägung, Reckung, Konditionierung (reversible Aufnahme von Feuchtigkeit, vorzugsweise von Wasser, durch ein thermoplastisches Kunststoffmaterial wie Homo- oder Copolyamid oder der gesamten Mehrschichtfolie) und/oder Bedruckung der erfindungsgemäßen Mehrschichtfolie kann vorteilhaft sein. Hingegen ist die erfindungsgemäße Mehrschichtfolie vorzugsweise nicht orientiert. Bevorzugt ist die erfindungsgemäße Mehrschichtfolie transparent, wenn sie in einem Schlauchliner oder Auskleidungsschlauch als Schlauchinnenfolie verwendet wird.

Entsprechend dem zuvor Erwähnten ist ein weiterer Gegenstand der vorliegenden Erfindung die Verwendung der erfindungsgemäßen Mehrschichtfolie, vorzugsweise in Form einer Schlauchfolie, als innenliegender Schlauch (Schlauchinnenfolie) eines Einlegeschlauchs zur Sanierung von unterirdischen Rohren, vorzugsweise von unterirdischen Kanalrohren. Dabei erlaubt die erfindungsgemäße Mehrschichtfolie, vorzugsweise in Form einer Schlauchfolie, aufgrund ihrer zumindest teilweisen Durchlässigkeit für UV-Strahlung die Aushärtung eines reaktiven Kunststoffharzes oder eines mit reaktivem Kunststoffharz getränkten Trägermaterials, das sich zwischen einem außenliegenden ein- oder mehrschichtigen Schlauch (Schlauchaußenfolie) und dem erfindungsgemäß ausgestaltetem innenliegenden Schlauch (Schlauchinnenfolie) befindet. Bevorzugt ist die erfindungsgemäße Mehrschichtfolie als Schlauchinnenfolie transparent und weiter bevorzugt ist die erfindungsgemäße Mehrschichtfolie als Schlauchaußenfolie kontakttransparent oder opak.

Als erfindungsgemäßes Trägermaterial werden bevorzugt Glasfasergewebe, Synthesefaserfilze (wie z.B. Nadelfilze), Vliese und/oder Non-woven-Textilfabrikate oder Textilien (wie z.B. Strickschläuche) verwendet, die jeweils mit mindestens einem reaktiven Kunststoffharz, vorzugsweise jeweils mit mindestens einem ungesättigten Polyesterharz (UP-Harz) und α,β-ungesättigten Monomeren, wie z. B. Styrol, getränkt sind. Ein entsprechendes Beispiel sind glasfaserverstärkte Kunststoffe (GFK). Als weitere Harze kommen neben den UP-Harzen auch EP- und VE-Harze in Frage.

Zur Tränkung eignet sich als Trägermaterial prinzipiell ein jegliches Material, das für Harz und für Flüssigkeiten saugfähig ist, und dadurch eben getränkt werden kann.

Im Rahmen dieser Erfindung ist es bevorzugt, dass auch das (harzgetränkte) Trägermaterial derart eingestellt ist, dass es die enorme Dehnung des Auskleidungsschlauches erlaubt. Hierfür erfolgreiche Maßnahmen und Möglichkeiten können etwa der WO2022/128218A1 entnommen worden.

Die Erfindung betrifft ebenfalls einen Einlegeschlauch zum Einbringen in ein unterirdisches Rohr, insbesondere ein Kanalrohr, zu dessen Sanierung. Der Einlegeschlauch umfasst eine erfindungsgemäße flüssigkeitsdichte Mehrschichtfolie gemäß Anspruch 1 als innenliegenden Schlauch (Schlauchinnenfolie, vorzugsweise in Form einer Schlauchfolie) und zudem bevorzugt auch eine erfindungsgemäße flüssigkeitsdichte außenliegende Schlauchfolie (Schlauchaußenfolie), die zur Rohrwandung weist.

Es ist nicht von Vorteil, wenn die Schlauchinnenfolie besonders gute mechanische Eigenschaften aufweist, insbesondere über ein sehr hohes Dehnvermögen verfügt, während die Außenfolie sich hier nicht mitdehnen würde. Daher werden die gleichen sehr guten Dehneigenschaften für den hier erfundenen äußerst dehnfähigen Schlauchliner oder Auskleidungsschlauch, der es erlaubt, einige verschiedene Dimensionen DN bei gleichen oder verschiedenen Kanälen erfolgreich zu sanieren, vorzugsweise dann erreicht, wenn sich die Schlauchinnenfolie und die Schlauchaußenfolie hervorragend und stabil (radial) ausdehnen können und hier auch noch das harzgetränkte Trägermaterial diese Ausdehnung erlaubt, mithin das harzgetränkte Trägermaterial hier "mitspielt".

Im Rahmen dieser Erfindung ist die Verwendung von herkömmlichen, nicht erfindungsgemäßen Schlauchaußenfolien (mit unzureichender Dehnfähigkeit) aber dennoch möglich, und diese kann mitunter sogar bevorzugt sein. In diesem Fall muss die Schlauchaußenfolie aber entweder über eine Dehnfuge verfügen, oder die Schlauchaußenfolie muss über eine Sollbruchstelle verfügen, die sich beim Aufstellen des erfindungsgemäßen Auskleidungsschlauches zur Sanierung des Kanalrohres öffnet. Auf diese Weise stellt die herkömmliche Außenfolie kein Hindernis für die herausragende Dehnung bzw. Dehnfähigkeit der erfindungsgemäßen Schlauchinnenfolie dar. Eine solche Soll-Dehnfuge ist beispielsweise in der DE 10 2011 103 001 A1 beschrieben.

Zwischen dem erfindungsgemäßen innen- und bevorzugt auch erfindungsgemäßen außenliegendem Schlauch ist ein durch UV-Strahlung aushärtbares Trägermaterial, vorzugsweise Glasfasermaterial, vorgesehen, das vorzugsweise mit einem reaktiven, ungesättigten Harz getränkt ist. Aus diesem getränkten Trägermaterial wird nach der Aushärtung das sanierte Kanalrohr gebildet. Nach der Aushärtung wird die erfindungsgemäße innenliegende Mehrschichtfolie bevorzugt vom mit Trägermaterial ausgekleideten Kanalrohr ab- und herausgezogen. Alternativ verbleibt die Schlauchinnenfolie im sanierten Rohr. Hier hat der Fachmann gewisse Möglichkeiten, das einzustellen.

Die Herstellung solcher Einlegeschläuche ist in den WO 2007/054350 A1 oder EP-B1 155 256 beschrieben.

Die erfindungsgemäße außenliegende Schlauchfolie ist vorzugsweise dehnbar wie die Schlauchinnenfolie gestaltet, und kann analoge Schichten und Bestandteile wie die Schlauchinnenfolie aufweisen. Die Außenfolie ist mehrschichtig. Im Gegensatz zur Schlauchinnenfolie absorbiert und/oder reflektiert sie UV-Strahlung und/oder kurzwelliges, sichtbares Licht. Die Außenfolie ist demnach eine UV- und Lichtschutzfolie und sichert das harzgetränkte Trägermaterial vor einer vorzeitigen Aushärtung (durch Strahlung von außen). Die außenliegende Schlauchfolie kann dabei entweder blickdicht oder zumindest kontakttransparent sein.

Vorzugsweise ist die als außenliegender Schlauch eingesetzte mehrschichtige Schlauchfolie eines Einlegeschlauches eine zumindest kontakttransparente, UV-Strahlung und/oder kurzwelliges, sichtbares Licht absorbierende und/oder reflektierende Schlauchfolie. Ein solcher außenliegender Schlauch ist in der WO 2010/075946 A1 sowie der DE 10 2010 023 764 A1 beschrieben, wobei dieser außenliegende Schlauch vorzugsweise die dort beschriebenen Inhaltsstoffe und Eigenschaften aufweist, vorzugsweise einschließlich der ebenfalls dort beschriebenen Sauerstoffbarriereschicht, Wasserdampfbarriereschicht oder Ölbarriereschicht.

Die Aufgabe dieser Erfindung wird im Wesentlichen durch die erfindungsgemäßen Folien gelöst, die zum Bau der Liner bzw. der Auskleidungs- bzw. der Einlegeschläuche verwendet werden. Mit der Verwendung dieser besonderen erfindungsgemäßen Folien, die sowohl die Schlauchinnenfolie als auch die Schlauchaußenfolie betreffen, werden schließlich Auskleidungs- oder Einlegeschläuche oder Schlauchliner zugänglich, welche die Aufgabe dieser Erfindung bestens erfüllen und zu einer erheblichen Produktverbesserung gegenüber dem Stand der Technik führen.

Insbesondere die Schlauchinnenfolien müssen daher bezüglich ihrer mechanischen Eigenschaften wie (Weiter-)Reißfestigkeit, Reißkraft, Dehnbarkeit, Spleißneigung, Schlagzähigkeit oder Durchstoßfestigkeit höchste Anforderungen erfüllen. Die bisher im Stand der Technik als Schlauchinnenfolien verwendeten PE/PA- oder PE/HV/PA-Folien, oder insgesamt alle Folien dieser Art (egal, wie viele Schichten diese Folien haben), die eine PA-Außenschicht haben, sind diesbezüglich noch erheblich verbesserungswürdig, um bei der Verwendung in Auskleidungsschläuchen noch mehr Sicherheit zu bieten.

Dabei zeigte sich insbesondere, dass die Polyamidschicht der bisher im Stand der Technik verwendeten Schlauchinnenfolien (und auch der Schlauchaußenfolien) äußerst anfällig gegenüber Witterungseinflüssen ist, hier insbesondere die Temperatur und die Luftfeuchtigkeit. Es ist bekannt, dass die bisher im Stand der Technik beschriebenen Schlauchinnenfolien, aber auch die Schlauchaußenfolien, im Winter etwa zur deutlichen Versprödung neigen, wenn sich deren Polyamidschicht auf (mindestens) einer Außenseite der entsprechenden Folie befindet. Gerade im Winter herrscht nämlich bei niedrigen Temperaturen um den oder unter dem Gefrierpunkt häufig eine sehr niedrige Luftfeuchtigkeit, was bei der Polyamidschicht regelmäßig zu einer Versprödung führt (denn Wasser ist bekanntlich ein Weichmacher für Polyamid). Diese Versprödung, die der Fachmann haptisch umgehend feststellen kann, wiederum führt zur Bildung von (Mikro)Löchern, zu Rissen und insgesamt zu einer ungewünschten Versteifung der Polyamidschicht, wodurch die Folien dann bei der Installation des Auskleidungsschlauches versagen.

Es ist damit eine weitere Aufgabe der vorliegenden Erfindung, Mehrschichtfolien zum Bau von Auskleidungsschläuchen zur grabenlosen Kanalsanierung zur Verfügung zu stellen, welche den hohen Anforderungen hinsichtlich ihrer mechanischen Stabilität - auch bei schlechten Witterungseinflüssen - genügen.

Diese Aufgabe wird bei dem erfindungsgemäßen Auskleidungsschlauch durch die Mehrschichtfolien gemäß Anspruch 1 gelöst.

In den erfindungsgemäßen Mehrschichtfolien, das sind sowohl Schlauchinnenfolien als auch Schlauchaußenfolien zum Bau von Auskleidungsschläuchen mit sehr hoher Dehnfähigkeit, ist in mindestens einer Schicht ein mLLDPE (Co-)Polymer zu einem Anteil von mehr als 30 Gew.-%, bevorzugt von mehr als 50 Gew.-%, besonders bevorzugt von mehr als 70 Gew.-% und am meisten bevorzugt zu mehr als 80 Gew.-% bis 100 Gew.-% enthalten.

Metallocene Low Linear Density Polyethylene (mLLDPE) sind lineare Polymere niedriger Dichte. Dabei handelt es sich um mittels Metallocen-Katalyse hergestellte EthylenCopolymere, bei dessen Polymerisation neben Ethylen auch 1-Hexen (in manchen Fällen auch 1-Octen) als weiteres Comonomer zugesetzt wurde.

Das Portfolio umfasst eine Vielzahl von Typen mit einer Dichte von ca. 902-936 kg/m³ und MFI-Werten von ca. 1,3-20 g/10min, die Segmente wie Folien, Spritzguss und Compounding abdecken. Die Gas-Phasen-Technologie mit Hexen als Comonomer bietet vor allem bei den niederdichten Materialien für den Folienbereich einige Vorteile. Besondere Reißfestigkeit, hoher Dart-Drop-Wert, sowie hohe Dehnbarkeit und eine hervorragende Optik bei sehr guter Verarbeitbarkeit sind hier wesentliche Attribute.

mLLDPE-Polymere werden in folgenden Anwendungen eingesetzt:
- Cast- und Blasfolien,
- Stretch-Hood/ Stretch-Folie,
- Mehrschichtfolien für Food und non-Food Anwendungen,
- Kaschierfolien,
- Strapazierfähige und gefrierbeständige Beutel und Säcke.

Besondere Eigenschaften von mLLDPE-Polymeren sind:
- Sehr gute Verarbeitung aufgrund auch neuester mLLDPE Generation,
- Sehr hohe Durchstoßfestigkeit (Dart-Drop),
- Sehr hohe Reißfestigkeit,
- Hervorragende Siegeleigenschaften.

Typische Beispiele für mLLDPE sind (nicht abschließend):
Sabic: SUPEER^{™} mLLDPE, z.B. Supeer 7118 LE oder SUPEER^{™} Metallocene Linear Low Density Polyethylene (mLLDPE) 7118NE oder SUPEER^{™} Metallocene Linear Low Density Polyethylene (mLLDPE) 7318BE,
oder Exxon Mobil: EXCEED ^{™} mLLDPE, wie die EXCEED 1018 Serie, Blown Film Resins, ExxonMobil Exceed^{™}, z.B. Exceed 1327 CA
oder LG Chemicals in Yeosu, South Korea ("LG Chem"): Lucene Typen, wie LUCENE SP 310 oder LUCENE SP 311
oder LUCENE SE1020A
oder Ineos, Eltex PF-Typen wie Eltex PF6112AA, PF6130LA, PF6212AA, PF6212KE, oder PF6220KJ
oder von REPSOL QUIMICA, S.A., wie z.B. Resistex ^{®} Typen, wie Repsol Resistex 1614 FG oder Repsol Resistex ^{®} 2710F oder Repsol Resistex ^{®} 3310F.

Die Verwendung von mLLDPE zur Herstellung von (Schlauchinnen-)Folien für Schlauchliner ist im Stand der Technik bekannt, siehe EP 2 740 587 A1 (dort z.B. Beispiel 1 und Vergleichsbeispiel 1) oder EP 2 835 395 A1 (dort Vergleichsbeispiel V5).

Die hiesigen Erfinder haben aber erkannt, dass bei den bisher im Stand der Technik beschriebenen Folien, die zum Bau von Auskleidungsschläuchen verwendet werden, zumeist höchstens 30 Gew.-% an mLLDPE-Polymer in einer Schicht, meist in der PE-Schicht unter Hinzunahme eines sehr hohen Anteils von LDPE (wie z.B. Lupolen 2420 F - siehe EP 2 740 587 A1 oder z.B. Lupolen 3010 D - siehe EP 2 835 395 A1) eingesetzt wurden.

Um hier einen positiven Effekt auf die mechanischen Eigenschaften der Schlauchinnen- oder der Schlauchaußenfolien vorteilhaft zu erzielen, wird vorzugsweise mindestens eine Schicht (aus Polyolefin) ausgewählt, die das mLLDPE von vorzugsweise mindestens 30 Gew.-% enthält, bevorzugt von mindestens 50 Gew.-% und weiter bevorzugt von mindestens 70 Gew.% und am meisten bevorzugt von mindestens 80 Gew.-%.

Weder die Verwendung von LDPE wie Lupolen 2420 F oder Lupolen 3010 D noch die Verwendung von herkömmlichem LLDPE (d.h. keine mLLDPE-Type, wie z.B. in der EP 2 379 625 B1 - Beispiel 3 beschrieben) führen zu derart verbesserten mechanischen Eigenschaften der Innen- wie der Außenfolie, wie diese im Rahmen dieser Erfindung gefunden wurden. Das belegen die unten gezeigten Beispiele und Vergleichsbeispiele sehr anschaulich.

Die genannten mLLDPE-(Co-)Polymere haben eine hohe Schlagfestigkeit, eine hohe Hitzebeständigkeit und auch bei niedrigen Temperaturen eine sehr hohe Flexibilität.

Oben wurde auf die hohe Bedeutung des Polyamids (PA) in Folien, die zur Herstellung von Auskleidungsschläuchen verwendet werden, bereits hingewiesen. Mindestens eine Schicht aus Polyamid ist in solchen Folien schon allein deshalb zwingend erforderlich, um eine Barrierewirkung gegen die in den aushärtbaren Harzen verwendeten polymerisierbaren Monomeren (wie z.B. Styrol oder (Meth)Acrylate) zu erzielen. Ansonsten würde der Auskleidungsschlauch nicht nur "austrocknen", die verschwindenden oder austretenden Monomere in den Harzen könnten auch in das Erdreich und in das Grundwasser gelangen, wodurch eine Verunreinigung eintreten kann, die unbedingt vermieden werden soll.

Obwohl Polyamid oder (mindestens) eine Polyamidschicht in Folien, die zur Herstellung von Auskleidungsschläuchen eingesetzt werden, zumeist erforderlich ist, hat es als Polymer eine ganze Reihe von Nachteilen, die oben ebenfalls bereits beschrieben wurden. Hier ist insbesondere nochmals an die Versprödung bei niedrigen Temperaturen um oder unter dem Gefrierpunkt zu erinnern.

Die Erfinder haben nun festgestellt, dass alle Probleme, die das Polyamid oder die PA-Schicht bei Innen- und Außenfolien, die zum Bau von Auskleidungsschläuchen verwendet werden, mit sich bringt, durch die Zugabe bereits geringer Anteile - bereits ab 0,1 Gew.-% Anteil in der PA-Schicht stellt sich ein erkennbarer Effekt ein - eines elastomeren Polyblockamids, das sowohl weiche elastische Segmente als auch steife, unflexible, harte Polyamid-Blöcke enthält, auf einfache Art und Weise gelöst werden können.

Als Begründung für diesen von den Erfindern gefundenen Effekt kann zum einen die hohe Verträglichkeit dieser Polyblockamide mit dem Polyamid aufgrund der Polyamid-Blöcke angeführt werden. Gleiche oder sehr ähnliche Materialien vertragen bzw. vermischen sich gern. Damit gelangt das Polyblockamid mit weichen Segmenten aufgrund der darin ebenfalls enthaltenen steifen Polyamid-Blöcke sehr homogen in die PA-Schicht der erfindungsgemäßen Innen- und Außenfolien.

Überraschenderweise wurde nun gefunden, dass die weichen Segmente in diesen Polyblockamiden nun dazu führen, dass eine generelle und hohe Flexibilität des Polyamids in der PA-Schicht bewirkt wird, insbesondere auch bei niedrigen Temperaturen. Eine Versprödung der Polyamidschicht findet praktisch nicht mehr statt. Die erfindungsgemäßen Folien mit einer Außenschicht aus Polyamid bleiben stets haptisch sehr weich und geschmeidig, auch bei Temperaturen unter 0°C und auch bei niedrigerer Luftfeuchtigkeit bzw. auch dann, wenn Wasser als Weichmacher weitgehend ausscheidet.

Dabei stellen die Polyblockamide, die sowohl weiche elastische Segmente als auch steife, unflexible, harte Polyamid-Blöcke enthalten, im eigentlichen Sinn keine Weichmacher dar, da es sich hierbei um höhermolekulare Polyblockamide handelt, während die "klassischen" Weichmacher durchweg als niedermolekular verstanden werden.

Besonders überraschend hat sich noch ein weiterer Effekt durch die Zugabe dieser Polyblockamide, die sowohl weiche elastische Segmente als auch steife, unflexible, harte Polyamid-Blöcke enthalten, in die (äußere) PA-Schicht der erfindungsgemäßen Mehrschichtfolien ergeben.

Völlig überraschend wurde die Dichtigkeit der Polyamidschicht gegenüber Monomeren oder Lösemitteln, also deren Barrierewirkung gegenüber diesen Chemikalien, erheblich verstärkt. Das zeigen die unten präsentierten Messungen. Das begründen die Erfinder damit, dass durch die Zugabe dieser Polyblockamide, die sowohl weiche elastische Segmente als auch steife, unflexible, harte Polyamid-Blöcke enthalten, die Bildung von sogenannten "Mikrolöchern" in der Schichtstruktur der Polyamidschicht unterbunden wird.

Man kann folglich so argumentieren, dass die Polyblockamide, die sowohl weiche elastische Segmente als auch steife, unflexible, harte Polyamid-Blöcke enthalten, einen Heilungseffekt auf Inhomogenitäten, auf Versprödungen und auf Löcherbildung der (herkömmlichen, bisher im Stand der Technik genannten) Polyamidschicht mit sich bringen. Das war nicht zu erwarten. Ursache dafür dürfte wohl ebenfalls die hohe Flexibilität oder Beweglichkeit der Weichsegmente in diesen Polyblockamiden sein, welche diesen "Heilungseffekt" bedingt. Zudem stellt sich offenbar auch eine (im Rahmen dieser Erfindung sehr positive) Wechselwirkung der Polyblockamide, die sowohl weiche elastische Segmente als auch steife, unflexible, harte Polyamid-Blöcke enthalten, mit den Wasserstoffbrückenbindungen des Polyamids, das in der PA-Schicht verwendet wird, ein.

Die sehr hohe Homogenität der (äußeren) Polyamidschicht in den erfindungsgemäßen Schlauchinnen- und Schlauchaußenfolien durch Zugabe von Polyblockamiden, die sowohl weiche elastische Segmente als auch steife, unflexible, harte Polyamid-Blöcke enthalten, konnte auf unterschiedliche Art und Weise nachgewiesen werden, etwa durch (Raster)Elektronenmikroskopie oder durch Atomic force microscopy (AFM oder Rasterkraftmikroskopie) an insbesondere den PA-Außenschichten der erfindungsgemäßen Folien, die diese Polyblockamide enthalten. In der PA-Schicht der erfindungsgemäßen Folien fanden sich keine "Störstellen" mehr, auch nicht bei Temperaturen unter 0°C.

Als Polyblockamide, die sowohl weiche elastische Segmente als auch steife, unflexible, harte Polyamid-Blöcke enthalten, kommen zum Beispiel alle sogenannten TPE-A Polymere in Frage, das sind thermoplastische Polyamidelastomere.

Vertreter dieser Produktklasse sind zum Beispiel VESTAMID^{®} E - Polyetherblockamid PEBA von Evonik.

Hiervon gibt es zum Beispiel diese Typen (Auswahl):
VESTAMID^{®} E40-S3, VESTAMID^{®} E47-S1, VESTAMID^{®} E47-S3, VESTAMID^{®} E55-S3, VESTAMID^{®} E62-S1, VESTAMID^{®} E62-S3, VESTAMID^{®} EX9200

Der Hersteller nennt die Eigenschaften wie folgt:
Die PA 12-Elastomere sind Blockcopolymere aus PA-12-Segmenten und Polyether-Segmenten (Poly ether block amide PEBA). PA-12-reiche Produkte zeigen die wesentlichen Eigenschaften von PA 12; mit zunehmendem Polyethergehalt prägt sich der Elastomercharakter aus: Die Polymere werden biegsamer und kälteschlagzäher.

Gegenüber konkurrierenden thermoplastischen Elastomeren zeichnen sich VESTAMID^{®} E-Formmassen durch folgende Eigenschaften besonders aus:
- Niedrige Dichte
- Gute Chemikalien- und Lösemittelbeständigkeit
- Leicht zu verarbeiten und einzufärben sowie leicht zu überspritzen
- Durch Thermodiffusionsdruck exzellent dekorierbar
- Exzellente Kälteschlagzähigkeit
- Härte und Flexibilität in weitem Bereich variierbar
- Hohe Elastizität und gutes Rückstellverhalten
- Geringe Temperaturabhängigkeit der mechanischen Eigenschaften
- Keine flüchtigen oder migrierenden Weichmacher

Polyetherblockamid oder PEBA ist ein thermoplastisches Elastomer (TPE). Es ist unter dem Namen PEBAX^{®} (Arkema) und VESTAMID^{®} E (Evonik Industries) bekannt. Es ist ein Blockcopolymer, das durch Polykondensation eines Carbonsäurepolyamids (PA6, PA11, PA12) mit einem Polyether mit endständigen Alkohol-Gruppen (z.B. Polytetramethylenglykol PTMG, Polyethylenglykol PEG) gewonnen wird. Die allgemeine chemische Struktur ist: O - (C O -**PA** - C O - O - **PE** - O)ₙ - H

Geeignete Typen von Pebax^{®} Grades sind zum Beispiel (Auswahl): PEBAX^{®} 7033, 6333, 5533, 5513, 4033, 3533 und 2533.

Alle hier als Beispiele genannten Typen PEBA können kommerziell erworben werden.

Als ideal hat sich im Rahmen dieser Erfindung die Zugabe von PEBA zu der mindestens einen Polyamidschicht in einer Menge von 0,1 bis 60,0 Gew.-%, bevorzugt 0,5 bis 50,0 Gew.-%, besonders bevorzugt von 1,0 bis 40,0 Gew.-% und am meisten bevorzugt von 2,0 bis 30,0 Gew.-% herausgestellt.

Die Vorteile der Erfindung sind insbesondere darin zu sehen, dass die erfindungsgemäßen Schlauchinnenfolien hervorragende mechanische Eigenschaften wie enorm hohe Dehnbarkeit, geringe Spleißneigung, Robustheit, Widerstandsfähigkeit, Durchstoßfestigkeit sowie eine sehr hohe Transmission im Wellenlängenbereich von 300 bis 500 nm aufweisen. Ein Platzen der Folien ist damit praktisch ausgeschlossen. Dabei werden diese hervorragenden mechanischen Eigenschaften auch bei niedrigen Temperaturen, etwa unter 0°C, aufrechterhalten.

Die Vorteile der Erfindung sind insbesondere weiter darin zu sehen, dass die erfindungsgemäßen Schlauchaußenfolien hervorragende mechanische Eigenschaften wie enorm hohe Dehnbarkeit, geringe Spleißneigung, Robustheit, Widerstandsfähigkeit, Durchstoßfestigkeit sowie eine sehr geringe Transmission im Wellenlängenbereich von 300 bis 500 nm aufweisen, mithin eine UV-Licht-Blockwirkung besitzen. Ein Platzen der Folien ist damit ebenfalls praktisch ausgeschlossen. Dabei werden diese hervorragenden mechanischen Eigenschaften auch bei niedrigen Temperaturen, etwa unter 0°C, aufrechterhalten.

Im Speziellen stellte es sich heraus, dass sich die erfindungsgemäßen Mehrschichtfolien (Innen- und Außenfolie eines Auskleidungsschlauchs zur grabenlosen Kanalsanierung) durch hervorragende mechanische Werte auszeichnen, insbesondere durch eine sehr gute Dehnfähigkeit (bestimmt nach der unten beschriebenen Aufblastestmethode), ohne dass eine Schicht spleißt. Vorzugsweise weist die erfindungsgemäße Mehrschichtfolie eine Dehnbarkeit bis zum "Spleiß", d.h. einem ersten Abriss einer innenliegenden Folienschicht, von mindestens 20 %, besonders bevorzugt von mindestens 25 %, ganz besonders bevorzugt von mindestens 30 % auf. Die Dehnbarkeit bis zum Platzen beträgt vorzugsweise mindestens 100 %, bevorzugt mindestens 110 %, besonders bevorzugt mindestens 120 %, und am meisten bevorzugt mindestens 130 % und sogar mindestens 140 %.

Es wurden im Rahmen dieser Erfindung Schlauchinnenfolien (und auch -außenfolien) mit einer (radialen) Dehnbarkeit von weit über 200 % hergestellt, was im Stand der Technik bis dato einmalig ist.

Mit den erfindungsgemäßen Schlauchinnen- und Schlauchaußenfolien wurden Auskleidungsschläuche hergestellt, die sich weit über 20 % dehnen ließen (siehe die Beispiele unten). Auch dies ist einmalig im bisherigen Stand der Technik.

Die erfindungsgemäßen Mehrschichtfolien können insbesondere für einen Einsatz als Schlauchinnenfolie oder Schlauchaußenfolie zur Herstellung von Auskleidungsschläuchen im Rahmen der grabenlosen Kanalsanierung einen Schichtaufbau mit drei, vier, fünf oder mehr Schichten aufweisen. Es können hierbei eine dreischichtige, eine vierschichtige, eine fünfschichtige oder noch höherschichtige Schlauch(innen- und außen-)folie zum Einsatz kommen, wobei erfindungsgemäß in mindestens einer der Polyolefinschichten ein mLLDPE zu mindestens 30 Gew.-% enthalten ist und in der mindestens einen Polyamidschicht ein Polyblockamid, das sowohl weiche elastische Segmente als auch steife, unflexible, harte Polyamid-Blöcke enthält.

Die mindestens eine PA-Schicht kann (jeweils) aus gleichem oder verschiedenem PA-Material bestehen. Auch PA-Mischungen sind bevorzugt. Weitere Details sind weiter unten ausgeführt. Sind zwei PA-Schichten vorhanden, kann ein Haftvermittler eingebracht werden. Es kann aber auch ohne Haftvermittler gearbeitet werden. Bevorzugt ist der Einsatz von (üblichen) Haftvermittlern.

Wie schon oben erwähnt, wurde überraschend herausgefunden, dass sich die erfindungsgemäßen Mehrschichtfolien, sei es in Form einer mehrschichtigen Schlauchfolie (d.h. eine durch (Co)-Extrusion, vorzugsweise durch Blasfolien-(Co)-Extrusion, hergestellte Mehrschichtfolie ohne Siegelnaht) oder einer zu einem Schlauch gesiegelten Mehrschichtfolie, durch sehr gute mechanische Eigenschaften, insbesondere durch eine sehr gute Dehnbarkeit, auszeichnen. Bei der Sanierung von unterirdischen Rohren können sie somit als Schlauchinnenfolie den auftretenden Belastungen, insbesondere beim Aufblasen im Rohrsystem, hervorragend standhalten. Das gilt auch bei den mechanischen Belastungen, denen die Folie beim Transport ausgesetzt ist. Des Weiteren wurde festgestellt, dass die als Schlauchinnenfolie eingesetzte Mehrschichtfolie hinreichend reißfest ist, wenn sie nach Aushärtung des Harzes vom Harz/Trägersystem abgezogen wird. So kann die Schlauchinnenfolie rückstandslos abgezogen werden und es bleiben keine Folienbruchstücke im sanierten Kanal. Zudem weist die erfindungsgemäße Mehrschichtfolie, wenn sie als Schlauchinnenfolie eingesetzt wird, eine gute Barrierewirkung gegen das Austrocknen des besagten Harzes auf.

Das soeben Gesagte gilt in analoger Weise auch für die erfindungsgemäßen (Schlauch)außenfolien.

Entsprechend dem zuvor Erwähnten ist ein weiterer Gegenstand der vorliegenden Erfindung die Verwendung der erfindungsgemäßen Mehrschichtfolien, vorzugsweise in Form einer Schlauchfolie, als innenliegender Schlauch (Schlauchinnenfolie) oder als außenliegender Schlauch (Schlauchaußenfolie) eines Einlegeschlauchs zur Sanierung von unterirdischen Rohren, vorzugsweise von unterirdischen Kanalrohren. Dabei erlaubt die erfindungsgemäße Mehrschichtfolie als Schlauchinnenfolie, vorzugsweise in Form einer Schlauchfolie, aufgrund ihrer zumindest teilweisen Durchlässigkeit für UV-Strahlung die Aushärtung eines reaktiven Kunststoffharzes oder eines mit reaktivem Kunststoffharz getränkten Trägermaterials, das sich zwischen einem (erfindungsgemäßen) außenliegenden mehrschichtigen Schlauch (Schlauchaußenfolie) und dem erfindungsgemäß ausgestaltetem innenliegenden Schlauch (Schlauchinnenfolie) befindet.

Die Verwendung der erfindungsgemäß eingesetzten Mehrschichtfolien kann sich auf sämtliche vorgenannten Ausführungsformen beziehen.

Es sei darauf hingewiesen, dass Merkmale, die im Zusammenhang mit einer beispielhaften Ausführungsform oder einem beispielhaften Gegenstand beschrieben werden, mit jeder anderen beispielhaften Ausführungsform oder mit jedem anderen beispielhaften Gegenstand kombiniert werden können.

Wenn ein Begriff mit einem unbestimmten oder bestimmten Artikel, wie zum Beispiel "ein" im Singular bezeichnet wird, schließt dies auch den Begriff im Plural mit ein und umgekehrt, sofern der Kontext nicht eindeutig anderes festlegt.

Der Ausdruck "umfassen", wie er hier verwendet wird, schließt nicht nur die Bedeutung von "enthalten" ein oder vice versa, sondern kann auch "bestehen(d) aus" und "im Wesentlichen bestehend aus" bedeuten.

Die Begriffe "Lage" oder "Schicht" sind synonym zu lesen.

Der Begriff "angeordnet" ist insbesondere als "anliegend" oder "angrenzend" zu lesen.

### Beispiele und Figuren:

Die nachfolgenden Beispiele und Vergleichsbeispiele dienen der Erläuterung der Erfindung und sind nicht einschränkend auszulegen.

### Vorbemerkung zu Messmethoden:

### Bestimmung der Dehnbarkeit

Zur Bestimmung der Dehnbarkeit eines Vergleichsbeispiels sowie verschiedener erfindungsgemäßer Mehrschichtfolien in Form von Schlauchfolien (Schlauchinnen- und Schlauchaußenfolien) und insbesondere auch der erfindungsgemäßen Auskleidungsschläuche selbst wurden Aufblastests durchgeführt.

Im Falle einer Mehrschichtfolie, die nicht als Schlauchfolie vorliegt, sondern z.B. als Flachfolie, wird diese zu einem Schlauch versiegelt, um anschließend dessen Dehnbarkeit zu bestimmen. Die Versuche im Rahmen der Erfindung wurden sowohl an Schlauchfolien als auch an fertigen Auskleidungsschläuchen (oder Einlegeschläuchen oder Schlauchlinern) durchgeführt.

Zur Vorbereitung wird eine 5 m lange Schlauchfolie, die einen Schlauchumfang von ca. 800 mm bis ca. 1200 mm aufweist, an beiden Enden durch zwei Metallscheiben (sog. Packer) mit einem geeigneten Durchmesser luftdicht verschlossen. Um die Luftdichtigkeit zu erreichen, wurden - wie es gängige Praxis bei solchen Aufblastests ist - Spanngurte und handelsübliches Gewebeklebeband verwendet. Durch ein Ventil in einem der beiden Packer wird Druckluft in die Schlauchfolie geleitet, bis diese platzt. Vor dem Platzen sind Schichtabrisse von innenliegenden Folienschichten erkennbar, die als "Spleiß" (auch: splice) bezeichnet werden. Hieraus bildet sich häufig eine nur lokal auftretende Blase in der Mehrschichtfolie, welche dann bei weiterem Aufblasen zu einem Folienriss und einem Platzen der Schlauchfolie führt. Die maximale Dehnung (Angabe in Prozent) wird ermittelt, indem der bis zum Platzen erzielte Außenumfang der Schlauchfolie an ihrer größten Stelle gemessen und mit dem anfänglichen Schlauchdurchmesser verglichen wird, wobei folgende Formel verwendet wird: Maximale Dehnbarkeit = [(Schlauchdurchmesser nach Aufblasen / anfänglicher Schlauchdurchmesser vor dem Aufblasen) - 1] · 100

Die gleiche Formel gilt für den "Folienspleiß", d.h. dem ersten bemerkbaren Abriss einer Schicht der Schlauchfolie (ohne dass der gesamte Schlauch davon betroffen ist): "Spleiß" = [(Schlauchdurchmesser nach Aufblasen und erstem erkennbaren Schichtabriss / anfänglicher Schlauchdurchmesser vor dem Aufblasen) - 1] · 100

Was für eine Schlauchfolie gemäß obiger Formel gilt, trifft selbstverständlich auch auf den gesamten Auskleidungsschlauch zu. Auch hier wurde die Dehnfähigkeit bis zum Platzen mit dem oben beschriebenen Meßverfahren ermittelt. Allerdings war ein Spleiss nur bei der Schlauchaußenfolie zu erkennen, da die Schlauchinnenfolie aufgrund der meist opaken Schlauchaußenfolie und des harzgetränkten Trägermaterials von außen (gemeint ist von außerhalb des Auskleidungsschlauches) nicht mehr erkennbar war.

### Bestimmung der Dichtigkeit der Folien

Um die Homogenität der jeweiligen Folien zu bestimmen und miteinander zu vergleichen, etwa um mögliche Mikrolöcher qualitativ bzw. indirekt festzustellen, wurde wie folgt vorgegangen: Dazu wurde die zu untersuchende Folie in quadratische Stücke mit den Abmessungen 10 cm mal 10 cm geschnitten. Zwei solcher Folienstücke wurden auf ihrer Polyolefin-Seite, d.h. auf der PE-Seite, die eine sehr gute Siegelseite darstellt, zunächst zu einer "Folientasche" verschweißt. Die Verschweißbedingungen mit üblichen Siegelgeräten kennt der Fachmann (zum Beispiel Siegeltemperatur 120°C, Siegeldruck 1 bar, Siegelzeit 1s). Dazu wurden die beiden Folienstücke passend übereinandergelegt und an ihrem linken Rand, an ihrem rechten Rand und an der Unterseite fest und absolut dicht miteinander verschweißt. Das gelang mit einem üblichen Siegelgerät mit einer Breite des Siegelbalkens von 1 cm und einer Länge von 15 cm. Von der noch offenen Oberseite dieser (an drei Stellen verschweißten) "Folientasche" werden (bevorzugt mit einer Pipette) ca. 5 g Toluol eingefüllt, das als chemischer Ersatz für das in den reaktiven Harzen verwendete Styrol dienen soll. Anschließend wird auch die noch offene Oberseite der Folientasche verschweißt, so dass die Flüssigkeit in Form der ca. 5 g Toluol nun komplett von der Folie umschlossen ist. Darauf kommt es an.

Es wird dabei penibel darauf geachtet, dass die Flächen der Folien pro "Tasche", die ca. 5 g Toluol enthalten, weitgehend oder praktisch identisch sind. Zudem wird darauf geachtet, jeweils möglichst genau ca. 5 g Toluol einzufüllen und von den Folien zu umschließen. Die eingebrachte Menge an Toluol wird nach dem vollständigen Verschließen der Folientasche auf 4 Stellen hinter dem Komma genau gewogen, was mit einer Labor- bzw. Analysewaage von Gram, Modell FS 120 gelang.

Die mit Toluol gefüllten, verschlossenen Folientaschen wurden anschließend über einen längeren Zeitraum unter Normklima gelagert. Nach einem halben Jahr und nach einem Jahr wurden die mit Toluol gefüllten, verschlossenen Folientaschen erneut gewogen, um festzustellen, ob und wieviel Toluol entwichen ist. Das gibt Auskunft über die Dichtigkeit der geprüften Folien, d.h. deren Barrierewirkung etwa gegen organische Lösungsmittel wie Toluol oder gegen Monomere wie Styrol. Je höher die Menge entwichenen Toluols ist, umso undichter ist die Folie. Die Ursache hierfür vermuten die hiesigen Erfinder darin, dass insbesondere in der Polyamidschicht sogenannte "Mikrolöcher" vorliegen, aus denen sowohl Lösungsmittel als auch Monomere durch die Folie entweichen können. Je mehr Toluol also nach einem halben oder einem ganzen Jahr noch in den geschlossenen Folientaschen vorliegt, desto homogener und dichter ist die Polyamidschicht der geprüften Folien.

Der Gewichtsverlust an Toluol wird in Prozent angegeben, die auf die Einwaage des Toluols (jeweils ca. 5 g) bezogen ist.

Das Ergebnis wird mit den weiteren unten genannten mikroskopischen Meßmethoden gegengeprüft.

### Weitere Messmethoden

Die Homogenität der jeweiligen Folien (auf deren äußere PA-Seite) konnte durch Analyse der Oberflächenbeschaffenheit mit der AFM-Methode (Atomic force microscopy - Rasterkraftmikroskopie) ermittelt werden.

Ein Rasterkraftmikroskop (Atomic Force Microscope, AFM) ist ein hochauflösendes Mikroskop, das auf der Messung der Wechselwirkungskräfte zwischen einer winzigen Spitze und einer Probe basiert. Es wird in verschiedenen wissenschaftlichen, industriellen und forschungsbezogenen Anwendungen eingesetzt.

Hier sind einige wichtige Verwendungen für ein Rasterkraftmikroskop:
1*. Oberflächenabbildung:* Das AFM ermöglicht die hochauflösende Abbildung von Oberflächen auf der Nanoskala. Es kann Strukturen und Topographien von Materialien mit sehr hoher Auflösung erfassen.
2. *Materialcharakterisierung:* Das AFM wird für die Charakterisierung von Materialeigenschaften eingesetzt, einschließlich Härte, Elastizität und Haftung. Dies ist besonders wichtig in der Materialwissenschaft und -technik.
3. *Oberflächenrauhigkeitsmessung:* Das AFM ermöglicht die genaue Messung der Oberflächenrauhigkeit von Materialien. Dies ist wichtig in Anwendungen wie der Herstellung von optischen Bauteilen und elektronischen Geräten.
4. *Kraftspektroskopie:* Das AFM ermöglicht die Messung der Wechselwirkungskräfte zwischen der Spitze und der Probe. Dies ermöglicht die Untersuchung von Kräfteeigenschaften und molekularen Bindungen auf der Nanoskala.

Insgesamt ist das Rasterkraftmikroskop aufgrund seiner hohen Auflösung und vielseitigen Anwendungsmöglichkeiten ein äußerst leistungsfähiges Instrument in verschiedenen wissenschaftlichen Disziplinen und Industriezweigen.

Die Messungen erfolgten an einem PHYWE Compact AFM, Rasterkraftmikroskop.

Zudem wurden die erfindungsgemäßen Folien und auch die Referenzfolien (aus dem Stand der Technik), insbesondere auf der Polyamid-Außenseite, mit Hilfe der Rasterelektronenmiskroskopie (REM) untersucht, was ebenfalls die Feststellung der Oberflächenbeschaffenheit erlaubt. Vor allem die sogenannten "Mikrolöcher" können damit sehr gut detektiert werden, falls es solche geben sollte.

Es wurde ein Hitachi Rasterelektronenmikroskop TM4000Plus-II für diese Untersuchungen verwendet.

### Beispiel 1:

### Chemische Charakterisierung der eingesetzten Rohstoffe

Als Polyamide (PA) für die mindestens eine PA-Schicht sind einsetzbar handelsübliche Polyamide (jeweilige Markennamen in Klammern) der Firmen BASF (Ultramid), Lanxess (Durethan), DuPont (Zytel), DSM Engineering Plastics (Akulon, Stanyl), EMS-Chemie (Grilamid, Grivory, Grilon), Evonik (Trogamid), Radici (Radilon, Radiflam, Raditer, Heraform, Heraflex) Rhodia (Technyl, Stabamid), UBE, DSM (Novamid), Atofina (Rilsan). Bei den im Folgenden vorgestellten Beispielen wird als Polyamidschicht Durethan C38 F (Lanxess) verwendet.

Bei den erfindungsgemäßen Folien wird diese PA-Schicht aus Durethan C38 mit einem Polyblockamid, das sowohl weiche elastische Segmente als auch steife, unflexible, harte Polyamid-Blöcke enthält, vermischt.

Als Polyblockamid, das sowohl weiche elastische Segmente als auch steife, unflexible, harte Polyamid-Blöcke enthält (abgekürzt als PEBA), wird im Rahmen dieser Erfindung VESTAMID^{®} E - Polyetherblockamid PEBA von Evonik verwendet.

Konkret verwendet wurde in den Beispielen das extrusionsfähige VESTAMID^{®} E40-S3 eingesetzt. Dieses zeichnet sich durch einen sehr niedrigen E-Modul oder Zugmodul ("tensile modulus"; im trockenen Zustand; nach ISO 527; unter 100 MPa) und durch eine äußerst niedrige Glasübergangsstufe Tg aus (im trockenen Zustand von -60°C) aus.

Ein typischer einsetzbarer Haftvermittler ist beispielsweise Admer NF 498 E, das ein mit Maleinsäureanhydridgruppen modifiziertes LDPE der Firma Mitsui ist. Ein weiterer typischer einsetzbarer Haftvermittler ist beispielsweise Admer QB 520 E, das ebenfalls ein mit Maleinsäureanhydridgruppen modifiziertes Homo-PP (Homo-Polypropylen) der Firma Mitsui ist.

Typische einsetzbare Polyolefine sind beispielsweise Lupolen 2420 F, das ein LDPE der Firma LyondellBasell Polymers ist, und Exceed 1327 CA der Firma ExxonMobil Chemical Company, das ein mittels Metallocen-Katalyse hergestelltes Ethylen-Copolymer ist, bei dessen Polymerisation neben Ethylen als weiteres Co-Monomer Hexen eingesetzt wird. Das in den erfindungsgemäßen Beispielen verwendete Exceed 1327 CA wird mit mLLDPE bezeichnet bzw. abgekürzt.

### Beispiel 2:

### Herstellung der Mehrschichtfolien:

Die Mehrschichtfolie des Vergleichsbeispiels 1 (V1) besteht aus drei Schichten. Dabei handelt es sich um das Vergleichsbeispiel 5 aus der DE 10 2009 041 841 A1. Diese Folie wird als Schlauchinnenfolie zur Herstellung von Auskleidungsschläuchen verwendet.

Auch die erfindungsgemäßen Mehrschichtfolien (Schlauchinnenfolien) der Beispiele 1-2 (B1-B2) bestehen jeweils aus drei Schichten.

Die als Schlauchaußenfolie verwendete Folie aus Beispiel 3 ist hingegen eine 5-Schicht-Folie. Als Referenz, d.h. als Vergleichsbeispiel V2, wird die Schlauchaußenfolie verwendet, die in der DE 10 2009 041 841 A1 in Beispiel 1 beschrieben ist.

Die einzelnen Schichten der Mehrschichtfolien grenzen jeweils in der Reihenfolge unmittelbar aneinander an, in der sie nachstehend aufgeführt sind.

Die Mehrschichtfolien der Vergleichsbeispiele V1 und V2 sowie der Beispiele 1-3 (B1-B3) wurden jeweils als Schlauchfolien durch Blasfolien-Co-Extrusion hergestellt.

### Beispiel 3:

### Prüfungen an Folien:

### Vergleichsbeispiele V1 (Schlauchinnenfolie) und V2 (Schlauchaußenfolie) und erfindungsgemäße Beispiele B1 und B2 (Schlauchinnenfolien) und B3 (Schlauchaußenfolie)

### Vergleichsbeispiel V1 (3-Schicht-Folie):

Dabei handelt es sich um das Vergleichsbeispiel 5 aus der DE 10 2009 041 841 A1. Diese Folie wird als Schlauchinnenfolie zur Herstellung von Auskleidungsschläuchen verwendet.

### Vergleichsbeispiel V2 (5-Schicht-Folie):

Als Referenz, d.h. als Vergleichsbeispiel V2, wird die Schlauchaußenfolie verwendet, die in der DE 10 2009 041 841 A1 in Beispiel 1 beschrieben ist.

### Erfindungsgemäßes Beispiel B1 (3-Schicht-Folie):

Aufbau Schlauchinnenfolie mit 60 % mLLDPE in Schicht (3) und 10 % PEBA in der PA-Schicht (1)

| Schicht-Nummer | Zusammensetzung | Anteil in Schicht in Gew.-% | Dicke in µm |
|---|---|---|---|
| (1) | • Durethan C38 F | • 90 | 40 |
| (Beim Schlauchliner in Richtung Kanalwand bzw. zum Harz gerichtet) | • PEBA | • 10 | |
| (2) | • Admer NF 498E | • 100 | 15 |
| (3) | • LDPE: Lupolen 2420 F | • 40 | 145 |
| Beim Schlauchliner zum strömenden Medium gerichtet (Kanalinneres) | | • 60 | |
| | • mLLDPE | | |
| | | | Gesamtdicke: 200 µm |

### Erfindungsgemäßes Beispiel B2 (3-Schicht-Folie):

Aufbau Schlauchinnenfolie mit 100 % mLLDPE in Schicht (3) und 15 % PEBA in der PA-Schicht (1)

| Schicht-Nummer | Zusammensetzung | Anteil in Schicht in Gew.-% | Dicke in µm |
|---|---|---|---|
| (1) | • Durethan C38 F | • 85 | 40 |
| (Beim Schlauchliner in Richtung Kanalwand bzw. zum Harz gerichtet) | • PEBA | • 15 | |
| (2) | • Admer NF 498E | • 100 | 15 |
| (3) | • mLLDPE | • 100 | 145 |
| Beim Schlauchliner zum strömenden Medium gerichtet (Kanalinneres) | | | |
| | | | Gesamtdicke: 200 µm |

### Erfindungsgemäßes Beispiel B3:

Aufbau: Schlauchaußenfolie mit 97 % mLLDPE in den Schichten (1) und (5) sowie mit 15 % PEBA in der PA-Schicht (3)

| Schicht-Nummer | Zusammensetzung | Anteil in Schicht in Gew.-% | Dicke in µm |
|---|---|---|---|
| (1) | • mLLDPE | • 97 | 65 |
| | • Batch 2 aus DE 10 2009 041 841 A1 | • 3 | |
| (2) | • Admer NF 498E | • 97 | 20 |
| | • Batch 1 aus DE 10 2009 041 841 A1 | • 3 | |
| (3) | • PA | • 90 | 30 |
| | • PEBA | • 10 | |
| (4) | • Admer NF 498E | • 97 | 20 |
| | • Batch 1 aus DE 10 2009 041 841 A1 | • 3 | |
| (5) | • mLLDPE | • 97 | 65 |
| | • Batch 2 aus DE 10 2009 041 841 A1 | • 3 | |
| Symmetrischer Aufbau | | | Gesamtdicke: 200 µm |

### Ergebnisse aus den Aufblastests:

| Beispiel/ Vergleichsbeispiel | Spleiß [%] | Dehnbarkeit [%] bis zum Platzen |
|---|---|---|
| B1 | 55 | 223 |
| B2 | 68 | 253 |
| B3 | 43 | 203 |
| V1 | 20 | 95 |
| V2 | 16 | 81 |

### Beobachtungen und Auswertungen der Aufblastests:

Vergleicht man die erfindungsgemäßen Beispiele für Schlauchinnenfolie B1 und B2 mit den Werten der aus dem Stand der Technik bekannten Referenzfolie aus dem Vergleichsbeispiel V1, wobei alle Folien eine Gesamtdicke von 200 µm haben, so erkennt man unmittelbar, welchen enorm positiven Effekt die Verwendung von mLLDPE in der Polyolefinschicht zu mindestens 30 Gew.-% sowie die Zugabe von PEBA in die Polyamidschicht in Bezug auf Spleiss und Dehnung bis zum Platzen mit sich bringt. Diese Werte haben sich bei den erfindungsgemäßen Folien praktisch verdreifacht!

Vergleicht man das erfindungsgemäße Beispiel für Schlauchaußenfolie B3 mit den Werten der aus dem Stand der Technik bekannten Referenzfolie aus dem Vergleichsbeispiel V2, wobei alle Folien wiederum eine Gesamtdicke von 200 µm haben, so erkennt man erneut unmittelbar, welchen enorm positiven Effekt die Verwendung von mLLDPE in der Polyolefinschicht zu mindestens 30 Gew.-% (bei Beispiel 3 ist das mLLDPE zu 97 Gew.-% in den Schichten 1 und 5 enthalten) sowie die Zugabe von PEBA in die Polyamidschicht in Bezug auf Spleiss und Dehnung bis zum Platzen mit sich bringt. Diese Werte haben sich bei der erfindungsgemäßen Folie beim Spleiss gegenüber der Referenz V2 praktisch fast verdreifacht, und bei der Dehnung bis zum Platzen von 81 % bei V2 auf 203 % bei Beispiel B3 erhöht!

### Haptik der Folien bei -18°C

Die Folien aus den Beispielen und den Vergleichsbeispielen wurden 1 Tag bei -18°C gelagert und anschließend einer händischen, d.h. haptischen Prüfung unterzogen. Es wurde also festgestellt, wie sich die Folien in der Hand anfühlen. Damit wurde die Steifheit oder die Weichheit auf eine einfache Art und Weise festgestellt.

Es fanden sich diese Ergebnisse:

| Beispiel/ Vergleichsbeispiel | Temperatur in °C der Lagerung 1 d | Beurteilung der Folie |
|---|---|---|
| B1 | -18 | Weich, geschmeidig |
| B2 | -18 | Sehr weich und sehr geschmeidig |
| B3 | -18 | Weich, geschmeidig |
| V1 | -18 | Fest, hart, "knittrig" |
| V2 | -18 | Fest, hart, "knittrig", spröde |

Daraus erkennt man, dass die erfindungsgemäßen Folien der Beispiele B1 bis B3 - unabhängig davon, ob es sich dabei um Schlauchinnen- oder um Schlauchaußenfolien handelt - auch bei einer Temperatur von -18°C weich und geschmeidig bleiben. Die erfindungsgemäßen Folien neigen also auch bei sehr geringen Temperaturen weit unter dem Gefrierpunkt nicht zur Versprödung.

Damit behalten die erfindungsgemäßen Folien auch ihre enorm hohe Dehnfähigkeit und deutlich verringerte Spleißneigung (d.h. ein Spleiss tritt erst bei deutlich höherer Dehnung auf) auch bei Temperaturen von -18°C bei, während hier die herkömmlichen, bisher im Stand der Technik bekannten Folien längst versagen.

### Ergebnisse aus den Untersuchungen mittels AFM

Mit der AFM-Methode, die oben beschrieben wurde, wurden die Folien aus den Beispielen und den Vergleichsbeispielen auf der außenliegenden PA-Seite hinsichtlich ihrer Beschaffenheit der Oberfläche auf beiden Seiten charakterisiert.

Da die Schlauchaußenfolien keine PA-Außenschicht haben, wurden diese nicht geprüft.

| Beispiel/ Vergleichsbeispiel | Ergebnis zur Oberflächenbeschaffenheit mittels AFM-Messungen auf der PA-Seite |
|---|---|
| B1 | Homogene, glatte Oberfläche, keine Löcher oder Krater, leicht wellige Struktur |
| B2 | Homogene, glatte Oberfläche, keine Löcher oder Krater, ebene Struktur |
| V1 | Leicht inhomogene Oberfläche, kleine Krater sind erkennbar, möglicherweise auch Mikrolöcher |

Ein fast analoges Ergebnis fand sich mit der Prüfung der PA-Seite der Folien mit Hilfe der Rasterelektronenmikroskopie (REM), wie folgt:

| Beispiel/ Vergleichsbeispiel | Ergebnis zur Oberflächenbeschaffenheit mittels REM-Messungen auf der PA-Seite |
|---|---|
| B1 | Homogene, glatte Oberfläche, keine Löcher oder Krater, ebene Struktur |
| B2 | Homogene, glatte Oberfläche, keine Löcher oder Krater, ebene Struktur |
| V1 | "Unruhige", inhomogene Oberfläche mit erkennbaren "Bergen" und Tälern", vereinzelt sind kleine Krater erkennbar, möglicherweise handelt es sich dabei auch um Mikrolöcher |

Aus den Ergebnissen der AFM und der REM-Messungen sind eindeutig die Vorteile der erfindungsgemäßen Schlauchinnenfolien der Beispiele B1 und B2 gegenüber der Referenzfolie aus Vergleichsbeispiel V1 erkennbar. Damit wurde die Vermutung der Erfinder bestätigt, ja sogar bewiesen, dass die Zugabe von PEBA zur PA-Schicht zu einer Art "Selbstheilung" der Oberfläche führt und aufgrund der hohen Flexibilität der Kombination von PA mit dem Polyblockamid, das sowohl weiche elastische Segmente als auch steife, unflexible, harte Polyamid-Blöcke enthält, jegliche Bildung von Kratern oder Mikrolöchern ausgeschlossen wird. Das war ein völlig überraschendes Ergebnis im Rahmen dieser Erfindung.

Bestimmung der Dichtigkeit der Folien (durch Entweichen von Toluol aus zu "Taschen" geformten und fest verschlossenen Folien)
Aus dem oben beschriebenen Test ergaben sich diese Ergebnisse:

| Beispiel/ Vergleichsbeispiel | Gewichtsverlust nach 6 Monaten in % | Gewichtsverlust nach 12 Monaten in % |
|---|---|---|
| B1 | 0,03 | 0,05 |
| B2 | 0,01 | 0,02 |
| B3 | 0,01 | 0,03 |
| V1 | 0,52 | 1,02 |
| V2 | 0,33 | 0,89 |

Auch anhand dieser Messungen erkennt man unmittelbar, dass die erfindungsgemäßen Folien der Beispiele B1 bis B3 weitaus dichter gegenüber dem Entweichen von Monomeren oder organischen Lösungsmitteln (hier Toluol) sind, als die Referenzfolien der Beispiele V1 und V2. Die erfindungsgemäßen Folien der Beispiele B1 bis B3 besitzen damit eine deutlich höhere Barriere gegen Monomere, Öle und Lösungsmittel im Vergleich zu den Referenzfolien. Dabei ist die Folie aus V2 noch etwas dichter als die Folie aus V1, vermutlich weil bei der Folie V2 die Polyamidschicht (PA) innenliegend ist und somit beidseitig von Polyolefinschichten geschützt ist, wodurch Witterungseinflüsse auf die PA-Schicht weitgehend vermieden werden. Eine Erklärung für die Prüfergebnisse wurde bereits oben mehrfach gegeben: Da die Folien der Beispiele B1, B2 und B3 keine Mikrolöcher aufweisen, weil sich deren mindestens eine Polyamidschicht durch Zugabe des Polyblockamid, das sowohl weiche elastische Segmente als auch steife, unflexible, harte Polyamid-Blöcke enthält, "selbst heilt", drückt sich dieser Effekt (makroskopisch) in deutlich besseren Barrierewerten dieser erfindungsgemäßen Folien aus.

Die erfindungsgemäßen Mehrschichtfolien können nicht nur für die Kanalsanierung mittels der beschriebenen UV-Härtung bzw. Härtung mit kurzwelligem sichtbaren Licht eingesetzt werden, sondern auch in Rohrsanierungssystemen, in denen der Einlegeschlauch (die erfindungsgemäße Mehrschichtfolie umfassend) thermisch gehärtet wird oder auch das Inversionsverfahren angewendet wird. Auch kann die erfindungsgemäße Mehrschichtfolie in Form eines Preliners oder einer Stütz- und Kalibrierfolie eingesetzt werden.

Als Preliner ist im Sinne dieser Erfindung eine Folie, vorzugsweise in Form eines Folienschlauchs oder zu einem Schlauch gesiegelte Flachfolie zu verstehen, die zwischen der Kanalwand des zu sanierenden Kanals und dem Schlauchliner eingebracht wird. Dabei erfüllt die Folie als Preliner eine Reihe von Aufgaben, wie zum Beispiel die Verhinderung der Verklebung des Harzes mit der Kanalwand, die Vermeidung des Kontakts mit Schmutz und Wasser zu dem noch nicht gehärteten Harz. Ferner verhindert die Preliner-Folie auch das Austreten von Harz aus dem Kanalsanierungssystem sowie die Kontamination von Erdreich und Grundwasser. Durch die Preliner-Folie werden außerdem die Zuläufe vor eindringendem Überschuss-Harz geschützt, so dass sich keine Harzpfropfen und Verstopfungen bilden können.

Die Verwendung der erfindungsgemäßen Mehrschichtfolien als Preliner ist auch ähnlich einer Funktion als Gleitfolie für den einzuziehenden Schlauchliner. In diesem Fall kommt es auf niedrige Reibungskoeffizienten zwischen der Gleitfolie und der Außenfolie des Schlauchliners an.

### Beispiel 4:

### Prüfung der Dehnfähigkeit an den Auskleidungsschläuchen mit dem Aufblasversuch:

Mit den Folien der erfindungsgemäßen Beispiele B1 und B2 (Schlauchinnenfolien) und B3 (Schlauchaußenfolie) sowie den Vergleichsbeispielen V1 (Schlauchinnenfolie) und V2 (Schlauchaußenfolie) wurden Auskleidungsschläuche mit dem sogenannten "Wickelverfahren", das zum Beispiel in der WO-A 95/04646 ausführlich beschrieben ist, hergestellt.

Die Messung der Dehnfähigkeit wurde exakt so wie bei den blanken Folien durchgeführt, wie es oben beschrieben wurde.

Auch hier gilt die Formel: Maximale Dehnbarkeit des Auskleidungsschlauches = [(Schlauchdurchmesser nach Aufblasen / anfänglicher Schlauchdurchmesser vor dem Aufblasen) - 1] · 100

Aufgrund der Tatsache, dass hier ein kompletter Auskleidungsschlauch dem Aufblastest unterzogen wurde, war das Erkennen von Spleiss bei den jeweiligen Folien nur äußerst schlecht möglich.

Daher würde in diesem Fall eigentlich nur die Dehnung bis zum "Platzen" des Auskleidungsschlauches ermittelt werden können. Damit ist auch der Punkt gemeint, an dem die Schlauchaußenfolie beginnt, aufzubrechen, so dass die angelegte Druckluft zum Aufstellen des Auskleidungsschlauches entweicht.

Im Rahmen der unten vorgestellten Testaufbauten T1 bis T4 und dem vergleichsweisen Testaufbau VT5 erfolgte die Aufdehnung des Auskleidungsschlauches insgesamt auch in definierten "Etappen" (Abschnitten) zu 7 %, 25 %, 44 % und 68 %. Es wurde an diesen Messpunkten bzw. "Etappen" dann die Eignung mit "bestanden" (nicht geplatzt) bzw. "nicht bestanden" (geplatzt) beurteilt.

### Beispiel 5:

### Auskleidungsschlauch zur Sanierung von schadhaften Kanälen:

Auf einen üblichen in der WO-A 95/04646 beschriebenen Dorn wird zunächst eine (flachgelegte) (Schlauch)Innenfolie der Flachbreite von 420 mm und der Länge 20 m aufgestrippt. Die Folie wird danach ausgezogen und sukzessive mit harzgetränkten Faserbändern der Breite 630 mm derart umwickelt, dass an jeder Stelle insgesamt eine Dicke der harzgetränkten Trägerschicht von 6,3 mm um den Innenfolienschlauch resultiert. Die (Glas)Faserbänder hatten vor der Tränkung mit dem reaktiven Harz ein Flächengewicht von 740 g/qm. Nach der Tränkung erhöhte sich das Flächengewicht auf 1450 g/qm.

Zur Tränkung wurde ein übliches UP-Harz verwendet, das dem Fachmann geläufig ist.

Beim Wickeln der harzgetränkten Faserbänder des erfindungsgemäßen Auskleidungsschlauches, das im Rahmen dieser Erfindung bevorzugt ist, wird dementsprechend berücksichtigt, dass sich aufgrund der hohen radialen Dehnung die Wandstärke des Laminats entsprechend verringert, so dass die Materialstärke der schraubenförmig übereinander gewickelten Faserbänder um ein entsprechendes Maß erhöht wurde, um die Lage aus Fasermaterial mit einem entsprechenden Übermaß herzustellen, welches im fertigen Produkt nach dem Ausdehnen und Aushärten die geforderte Festigkeit gewährleistet.

Der so, mit harzgetränkten Faserbändern umwickelte und mit aufgebrachten Längszugbändern, hergestellte Innenfolienschlauch wird danach zwischen zwei als Flachfolie vorliegende UV- und lichtdichte (erfindungsgemäße) Außenfolien (Flachbreite 570 mm, Dicke 200 my) eingebracht und danach wurden diese Außenfolien durch Verschweißen zu einem Schlauch verschlossen, wobei dazu eine Außenfolie der Breite 570 mm von oben mit einer Außenfolie der gleichen Breite von 570 mm von unten zur Bildung des Außenschlauchs zugeführt wird. Die mit den harzgetränkten Faserbändern umwickelte Innenfolie befindet sich zwischen den beiden als Flachfolie vorliegenden Außenfolien.

15 m des so hergestellten Auskleidungsschlauches werden, für die nachfolgenden horizontalen Aufblasversuche auf verschiedene Dimensionen, verwendet. Diese 15 m werden der Mitte des 20 m langen Auskleidungsschlauchs entnommen.

Im horizontalen Aufblasversuch wird der Auskleidungsschlauch durch 1,5 m lange Rohrabschnitte mit den Dimensionen (d.h. Durchmessern) (1) 300 mm, (2) 350 mm und (3) 400 mm eingezogen. Nach Verschließen der Enden des Auskleidungsschlauches unter Verwendung von Packern, die dem Fachmann geläufig sind, ergibt sich folgender Aufbau in den Dimensionsweiten:
(1) - (2) - (3) - (2) - (1).

In diesen Aufblasversuchen wurde der Auskleidungsschlauch mit einem Innendruck von bis zu 400 mbar stufenweise auf die notwendigen Dimensionen aufgedehnt.

Zudem wird ein Auskleidungsschlauch gefertigt, indem eine flachgelegte Schlauchinnenfolie der Flachbreite 920 mm und der Länge 15 m auf dem Dorn aufgestrippt wird. Die Folie wird danach ausgezogen und sukzessive mit harzgetränkten Faserbändern der Breite 840 mm derart umwickelt, dass an jeder Stelle insgesamt eine Dicke der harzgetränkten Trägerschicht von 9,8 mm um den Innenfolienschlauch resultiert. Die (Glas)Faserbänder hatten vor der Tränkung mit reaktivem Harz ein Flächengewicht von 740g/qm. Nach der Tränkung erhöhte sich das Flächengewicht auf 1450 g/qm.

Zur Tränkung wurde ein übliches UP-Harz verwendet, das dem Fachmann geläufig ist. Der so hergestellte mit harzgetränkten Faserbändern umwickelte Innenfolienschlauch wird danach in zwei als Flachfolie vorliegende UV- und lichtdichte (erfindungsgemäße) Außenfolien (Flachbreite 1150 mm, Dicke 200 my) eingebracht und danach werden die Außenfolien durch Verschweißen zu einem Schlauch verschlossen.

3 m des so hergestellten Auskleidungsschlauches werden für den nachfolgenden vertikalen Aufblasversuch auf DN 1000 mit konischem Übergang verwendet. Diese 3 m werden dem 15 m langen Auskleidungsschlauchs entnommen.

Im vertikalen Aufblasversuch wird zusätzlich ein weiterer erfindungsgemäßer Innenfolienschlauch, welcher eine Flachbreite von 920 mm aufweist und an seinem einen Ende mit einem Knoten oder Kabelbinder verschlossen wird, sodass ein Foliensack entsteht, der bevorzugt ca. 10% länger als der konfektionierte Auskleidungsschlauch ist, in den Auskleidungsschlauch eingeführt. Im Anschluss daran wird der Auskleidungsschlauch am unteren Ende mit einer Naht geschlossen, zusammen mit dem eingesetzten Luftsack mittels eines Packers am oberen Ende verschlossen und unter Zuhilfenahme eines Krans in eine vertikale Testform bis zu dessen Boden abgesenkt. Der Innenraum des Luftsacks wird über eine externe Druckluftquelle mit Druckluft beaufschlagt. Hierdurch wird der zusätzliche Innenfolienschlauch (Luftsack) expandiert, und legt sich zunächst an den Auskleidungsschlauch und dessen Innenfolienschlauch an. In diesem Aufblasversuch wurde der Auskleidungsschlauch stufenweise mit einem Innendruck von bis zu 500 mbar auf die notwendige Dimension aufgedehnt.

Ergebnisse aus den Aufblastests an Auskleidungsschläuchen zur Sanierung von Kanälen mit unterschiedlichen Durchmessern (erfindungsgemäße Testaufbauten T1 bis T4, Vergleichstestaufbau VT5):

| Testaufbau Auskleidungsschlauch | Schlauchinnenfolie B1 und B2 | | Außenfolie B3 | Dehnbarkeit | | | |
|---|---|---|---|---|---|---|---|
| | Materialstärke | Flachbreite | Flachbreite | 7% | 25% | 44% | 68% |
| T1 | 200µm | 420 | 570 | bestanden | bestanden | bestanden | bestanden |
| T2 | 150µm | 420 | 570 | bestanden | bestanden | bestanden | bestanden |
| T3 | 170µm | 420 | 570 | bestanden | bestanden | bestanden | bestanden |
| T4 | 120µm | 920 | 1150 | --- | --- | --- | bestanden |

| Testaufbau Auskleidungsschlauch | Schlauchinnenfolie V1 | | Außenfolie V2 | Dehnbarkeit |
|---|---|---|---|---|
| | Materialstärke | Flachbreite | Flachbreite | 68% |
| VT5 | 200µm | 920 | 1150 | Geplatzt: nicht bestanden |

Die Resultate mit den erfindungsgemäßen Auskleidungsschläuchen der Testaufbauten T1 bis T4 belegen deren herausragende Eignung zur Sanierung von schadhaften Schächten oder Kanälen, da damit eine Dehnbarkeit von mindestens 68 % erzielt werden konnte. Das war aber immer noch nicht das Ende der Möglichkeiten.

Wären die erfindungsgemäßen Auskleidungsschläuche der Testaufbauten T1 bis T4 bei einer erfolgreichen Dehnung von 68 % nicht eingestellt worden (da bei weitem bereits ausreichend!), hätte sicherlich eine nochmals höhere Dehnung erreicht werden können (die Erfinder vermuten hier sogar eine Dehnbarkeit weit über 100 %).

Demgegenüber versagte der nicht erfindungsgemäße Auskleidungsschlauch des vergleichsweisen Testaufbaus VT5 (mit den nicht erfindungsgemäßen Folien) bei der Dehnung von 68 %. Das Platzen dieses Auskleidungsschlauches aus VT5 erfolgte sehr viel früher.

Wie die Erfinder weiterhin erkannt haben, ergibt sich bei den erfindungsgemäßen Schlauchfolien in überraschender Weise eine äußerst dehnbare Verbundfolie, bei der die Polyamid-Lage aufgrund der Zugabe des Polyblockamids, das sowohl weiche elastische Segmente als auch steife, unflexible, harte Polyamid-Blöcke enthält, auch dann als Barrierelage geschlossen erhalten bleibt und einen zuverlässigen Schutz gegen den Durchtritt von Styrol gewährleiste, wenn diese z.B. um mehr als 65 % gedehnt wird. Dadurch, dass die PA-Barrierelage mit dem Polyblockamid, das sowohl weiche elastische Segmente als auch steife, unflexible, harte Polyamid-Blöcke enthält, beim Aufdehnen um z.B. mehr als 65 % nicht lokal einreißt, wird das Polyolefin, insbesondere das m-LLDPE, durch die PA-Barrierelage geschützt und nicht durch das Styrol, welches im Reaktionsharz als Lösungsmittel enthalten ist, zersetzt. Dieser von der Anmelderin gefundene unerwartete Effekt der Stabilisierung der ebenfalls sehr hochdehnbaren m-LLDPE-Lage durch das aufgebrachte PA mit dem Polyblockamid, das sowohl weiche elastische Segmente als auch steife, unflexible, harte Polyamid-Blöcke enthält, führt insgesamt zu einer Verbundfolie, die den Austritt von Styrol in den Innenraum des Auskleidungsschlauchs auch bei hohen Dehnungen von über 65 % mit einer überraschend hohen Zuverlässigkeit verhindert.

Wie die Erfinder anhand von Versuchen weiterhin gefunden haben, wird demgegenüber eine reine m-LLDPE-Folie ohne die aufgebrachte PA-Lage mit dem Polyblockamid, das sowohl weiche elastische Segmente als auch steife, unflexible, harte Polyamid-Blöcke enthält, durch das Styrol im Reaktionsharz in kürzester Zeit deutlich stärker als eine reine PE-Folie angegriffen und geschädigt, so dass das Styrol selbst bei m-LLDPE-Folien mit einer Dicke von mehr als 100 Mikrometern durch die Folie nicht mehr wirksam zurückgehalten wird.

Es kommt also auf die höchste Stabilität der mindestens einen Polyamidschicht in den erfindungsgemäßen Folien an, welche (nur) durch Zugabe des Polyblockamids, das sowohl weiche elastische Segmente als auch steife, unflexible, harte Polyamid-Blöcke enthält, auch bei enorm hohen Dehnungen gewährleistet wird.

Nach einem weiteren der Erfindung zugrunde liegenden Gedanken, umfasst die mit dem härtbaren Reaktionsharz getränkte schlauchförmige Lage aus Fasermaterial wenigstens ein schraubenförmig überlappend gewickeltes Faserband oder wenigstens ein sich in Längsrichtung des Auskleidungsschlauchs erstreckendes, an seinen Längsrändern überlappend gelegtes Faserband, welches um die Barrierelage herumgeführt ist und mit seiner Innenseite unmittelbar an der Barrierelage anliegt. Hierdurch ergibt sich der Vorteil, dass die Faserbandlage durch mehrlagiges überlappendes schraubenförmiges Übereinanderwickeln oder Übereinanderlegen von mehreren Faserbändern in einer beliebigen Stärke erzeugt werden kann, ohne die radiale Aufdehnung zu beeinträchtigen.

Bei der bevorzugten Ausführungsform der Erfindung ist der Innenfolienschlauch für UV-Licht durchlässig, und das Reaktionsharz ist ein durch Bestrahlen mit UV-Licht härtbares Harz.

Alternativ kann es vorgesehen sein, dass das Reaktionsharz ein durch Wärme härtbares Harz ist, und der (erfindungsgemäße) Innenfolienschlauch 10 dazu eingerichtet ist, zum Aushärten des Harzes mit erwärmtem Wasser, Heißdampf oder erhitzter Luft beaufschlagt zu werden.

Um die sogenannte Kalibrierbarkeit des erfindungsgemäßen Auskleidungsschlauchs zu verbessern und den Austritt von Styrol in das umliegende Erdreich zu verhindern, ist die schlauchförmige Lage aus Fasermaterial in vorteilhafter Weise bevorzugt von einem (erfindungsgemäßen) UV- und lichtdichten Außenfolienschlauch umgeben, der aus einer wenigstens dreilagigen Verbundfolie geformt ist, die folgende Lagen (Schichten) umfasst: Mindestens eine außenliegende weitere erste Lage, die aus einem Metallocen-Linear Low Density Polyethylen (m-LLDPE) besteht oder ein solches bevorzugt zu mindestens 30 Gew.-% enthält,
mindestens eine Haftvermittler-Schicht und
mindestens eine Barriereschicht, die aus Polyamid (PA) besteht, das ein Polyblockamid, das sowohl weiche elastische Segmente als auch steife, unflexible, harte Polyamid-Blöcke enthält, Auf die Innenseite der inneren Schutzlage aus mindestens 30 Gew.-% m-LLDPE ist bei der zuletzt beschriebenen Ausführungsform weiterhin bevorzugt eine der schlauchförmigen Lage aus Fasermaterial zugewandte Lage aus Vliesmaterial, insbesondere ein Polyestervlies, aufkaschiert, welches nach dem Aushärten des Reaktionsharzes zu einer innigen Verbindung der außenliegenden Schutzlage aus m-LLDPE mit der Lage aus Fasermaterial führt und den Auskleidungsschlauch dadurch mechanisch sehr widerstandsfähig macht. Wie die Erfinder in diesem Zusammenhang gefunden haben, ist auch das Aufkaschieren von vliesförmigem Polyestermaterial, welches beispielsweise eine Dicke von mehr als 20 µm und weniger als 500 µm besitzen kann, auf die Schutzlage aus m-LLDPE in überraschender Weise möglich, was bisher nur in Verbindung mit der Blasfolienextrusion von PE-PA-PE Folien aus herkömmlichem Polyethylen (LDPE) bekannt ist, bei der das Vliesmaterial auf das noch flüssige erwärmte Polyethylen aufgeschmolzen wird.

Wie die Erfinder ferner erkannt haben, dehnt sich die Vlieslage beim Expandieren des Auskleidungsschlauchs trotz der sehr hohen Dehnbarkeit der erfindungsgemäßen Schlauchaußenfolie problemlos mit auf und bleibt nach dem Expandieren des Auskleidungsschlauchs und Aushärten des Reaktionsharzes als geschlossene homogene Lage vollflächig erhalten, ohne durch das Styrol beeinträchtigt zu werden. Dadurch ergibt sich eine mechanisch hochfeste Verbindung zwischen dem (erfindungsgemäßen) Außenfolienschlauch und dem Fasermaterial, der die mechanische Belastbarkeit des installierten erfindungsgemäßen Auskleidungsschlauchs insgesamt in vorteilhafter Weise erhöht.

Um einer mechanischen Beschädigung des erfindungsgemäßen Auskleidungsschlauchs beim Einziehen in einen im Wesentlichen horizontal verlaufenden Kanal entgegen zu wirken, kann bei der bevorzugten Ausführungsform des Auskleidungsschlauchs um den Außenfolienschlauch herum ein weiterer Außenfolienschlauch aus einem verstärkten zugfesten Werkstoff, insbesondere einer gewebeverstärkten Kunststofffolie, etwa einer LKW-Plane, zur Aufnahme von axialen Zugkräften angeordnet sein, die entlang einer Sollrissstelle beim Expandieren des Auskleidungsschlauchs aufreißt und trotz der geringen Dehnbarkeit des Gewebematerials eine radiale Aufdehnung ermöglicht, so dass sich der erfindungsgemäße Auskleidungsschlauch insgesamt radial soweit aufweiten kann, dass dieser vollflächig an der Innenwand des Kanals anliegt.

Die Erfindung wird - ohne diese in irgendeiner Art einzuschränken - nachfolgend mit Bezug auf die Zeichnungen anhand von bevorzugten Ausführungsformen am Beispiel eines Kanalrohres mit zwei Durchmesserabschnitten sowie eines Kanalschachts anschaulich beschrieben.

In den Zeichnungen zeigen:
- Fig. 1: eine schematische Querschnittsansicht durch den Wandaufbau eines beispielhaften erfindungsgemäßen Auskleidungsschlauchs mit einer vergrößerten Darstellung der unterschiedlichen Lagen,
- Fig. 2: eine schematische Darstellung einer bevorzugten Ausführungsform einer Wickelvorrichtung mit einem erfindungsgemäßen Auskleidungsschlauch, während des Wickelvorgangs,
- Fig. 3: eine schematische Darstellung eines defekten Kanalrohres mit einem ersten Rohrabschnitt mit kleinerem Durchmesser sowie einem zweiten Rohrabschnitt mit einem erweiterten Durchmesser, in die ein erfindungsgemäßer Auskleidungsschlauch eingezogen wurde,
- Fig. 4: eine schematische Darstellung eines defekten Kanalschachts nach dem Einsetzen eines erfindungsgemäßen Auskleidungsschlauchs, in den ein weiterer luftdichter Kalibiersack eingeführt wird, der an seinem ersten unteren Ende durch einen Knoten verschlossen ist, und
- Fig. 5: den Kanalschacht von Fig. 4 nach dem Aufdehnen und Aushärten des Auskleidungsschlauchs.

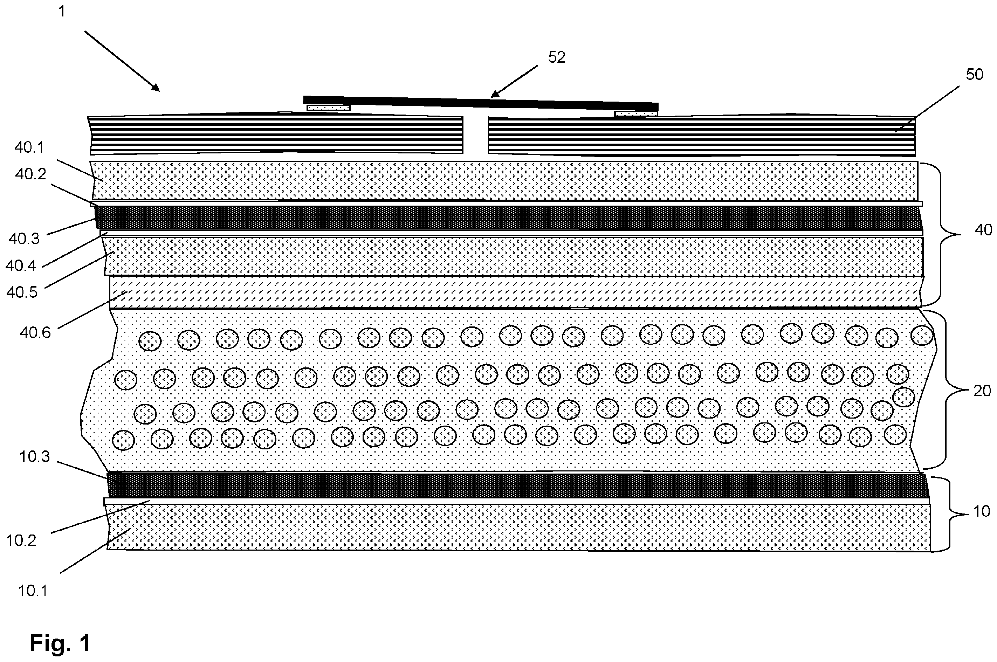

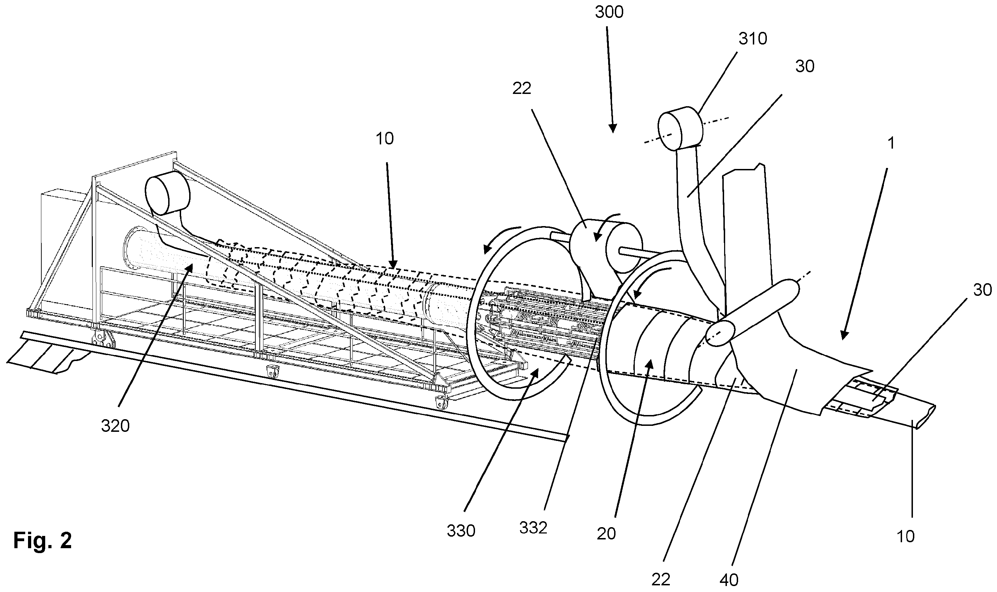

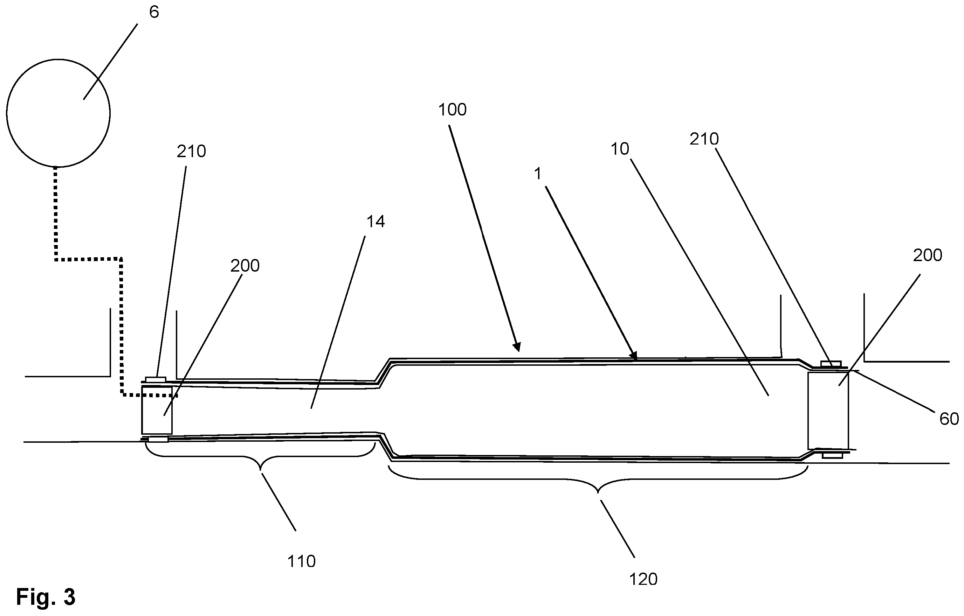

Wie in der Darstellung von Fig. 1 und 2 gezeigt ist, umfasst ein Auskleidungsschlauch 1 zur Sanierung eines in Fig. 3 dargestellten defekten Kanalrohres 100, das einen ersten Rohrabschnitt 110 mit einem ersten Durchmesser und einen sich daran anschließenden zweiten Rohrabschnitt 120 mit einem erweiterten Durchmesser aufweist, einen Innenfolienschlauch 10 sowie eine um diesen herum angeordnete, radial aufweitbare Lage aus Fasermaterial 20, welches mit einem härtbaren Reaktionsharz getränkt ist.

Der in Fig. 1 im Querschnitt gezeigte Innenfolienschlauch 10 ist aus einer Verbundfolie geformt, die (mindestens) eine erste innere Lage 10.1 bestehend aus mindestens 30 Gew.-% m-LLDPE und (mindestens) eine auf dieser angeordnete Barrierelage 10.3 aus Polyamid, das ein Polyblockamid, das sowohl weiche elastische Segmente als auch steife, unflexible, harte Polyamid-Blöcke enthält, umfasst, welche über (mindestens) eine Verbindungslage 10.2, insbesondere einen Haftvermittler, miteinander verbunden sind.

Der erfindungsgemäße Auskleidungsschlauch zeichnet sich bezüglich der verwendeten erfindungsgemäßen Schlauchinnenfolie dadurch aus, dass das Kunststoffmaterial der (mindestens) eine Lage 10.1 ein Metallocen Linear Low Density Polyethylen (m-LLDPE) ist oder ein solches zu mindestens 30 Gew.-% enthält, dass die mindestens eine Lage 10.1 eine Dicke von 10 bis 500 µm, bevorzugt von 20 bis 400 µm, besonders bevorzugt von 30 bis 300 µm und am meisten bevorzugt von 40 bis 200 µm aufweist. Die mindestens eine PA-Schicht10.3 weist eine Dicke von wenigstens 5 bis 200 µm, bevorzugt von 15 bis 90 µm und besonders bevorzugt von 20 bis 60 µm auf.

Die mindestens eine PA-Schicht 10.3 enthält ein Polyblockamid, das sowohl weiche elastische Segmente als auch steife, unflexible, harte Polyamid-Blöcke besitzt, und grenzt unmittelbar an die Lage aus Fasermaterial 20 an.

Die Verbindungslage 10.2, also die mindestens eine Haftvermittler-Schicht (HV), weist dabei bevorzugt eine Dicke von 1 bis 50, bevorzugt von 2 bis 20 µm auf, wobei als Haftvermittler ein aus dem Stand der Technik bekannter Haftvermittler, wie z.B. ein mit Maleinsäureanhydrid gepfropftes, auf LDPE oder LLDPE basierendes Polymer verwendet werden kann, das von der Firma Mitsui Chemicals Europe GmbH zur Anhaftung von Polyamid an Polyethylen-Kunststofffolien z.B. unter der Handelsbezeichnung "Admer ^{™} NF 498E" vertrieben wird.

Die Verbindung der mindestens einmal in der erfindungsgemäßen Schlauchfolie (hier Innenfolie) vorhandenen Lagen 10.1, 10.2 und 10.3 der Verbundfolie erfolgt bevorzugt durch Blasfolien-Coextrusion von m-LLDPE, dem Haftvermittler HV und dem PA.

Wie aus Fig. 1 weiterhin entnommen werden kann, ist bei der bevorzugten Ausführungsform des Auskleidungsschlauchs 1 um die Lage aus Fasermaterial 20 herum ein erfindungsgemäßer Außenfolienschlauch 40 angeordnet, der - ebenfalls wie die Schlauchinnenfolie - bevorzugt aus einer wenigstens dreilagigen Verbundfolie geformt ist, die folgende Lagen bzw. Schichten umfasst:
Mindestens eine außenliegende erste Lage 40.1, die aus m-LLDPE besteht oder ein solches in der Schicht zu mindestens 30 Gew.-% enthält,
eine auf der Innenseite der ersten Lage 40.1 angeordnete und mit dieser über mindestens eine weitere Verbindungslage 40.2 eines Haftvermittler verbundene mindestens eine Barrierelage 40.3, die aus PA besteht, oder ein solches enthält, und daneben ein Polyblockamid, das sowohl weiche elastische Segmente als auch steife, unflexible, harte Polyamid-Blöcke aufweist. Darüber hinaus kann die erfindungsgemäße Schlauchaußenfolie nach der Schicht 40.3 nochmals über eine weitere Haftvermittler-Schicht 40.4 mit schließlich einer weiteren Polyolefinschicht 40.5 verbunden sein.
Das ist sogar bevorzugt.

Auf die Innenseite der inneren Schutzlage 40.5 aus Polyolefin, insbesondere aus Polyethylen mit mindestens 30 Gew.-% an mLLDPE, d.h. auf der dem Zentrum des Auskleidungsschlauch 1 zugewandten Seite (in Richtung des später durchströmenden Mediums durch den sanierten Kanal) ist eine der schlauchförmigen Lage aus Fasermaterial 20 zugewandte Lage 40.6 aus Vliesmaterial, insbesondere ein PE-, ein PP- oder ein Polyestervlies oder auch ein Glasvlies, aufkaschiert, welches eine Dicke im Bereich von 20 bis 1000 µm, bevorzugt von 30 bis 500 µm besitzt.

Wie der Darstellung der Fig. 2 weiterhin entnommen werden kann, ist bei den zuvor beschriebenen Ausführungsformen des Auskleidungsschlauchs 1 auf der Lage aus Fasermaterial 20 bevorzugt wenigstens ein Längszugband 30 angeordnet, welches sich in Längsrichtung des Auskleidungsschlauchs 1 erstreckt. Das Längszugband 30, welches in Fig. 1 aus darstellungstechnischen Gründen nicht mit eingezeichnet ist, umfasst bevorzugt durchgängige Glasfasern oder Glasfaser-Rovinge, die bevorzugt über die gesamte Länge des Auskleidungsschlauchs 1 hinweg verlaufen und die Axialkräfte aufnehmen, wenn der Auskleidungsschlauch 1 beispielsweise mittels eines Zugseils in ein zu sanierendes defektes Kanalrohr 100 eingezogen wird.

Wie der Darstellung der Fig. 1 weiterhin entnommen werden kann, kann um den (bevorzugt erfindungsgemäßen) Außenfolienschlauch 40 herum ein weiterer Außenfolienschlauch 50 aus einem verstärkten zugfesten Werkstoff, insbesondere einer gewebeverstärkten Kunststofffolie, wie etwa einer LKW-Plane, angeordnet sein, die bevorzugt beim Einziehen des Auskleidungsschlauchs in ein horizontal verlaufendes Kanalrohr verwendet wird. Um eine radiale Aufdehnung des weiteren Außenfolienschlauchs 50 zu ermöglichen, besitzt dieser eine in Längsrichtung des Auskleidungsschlauchs 1 verlaufende Sollrissstelle 52, die z.B. durch einen die beiden Längsrandabschnitte des gewebeverstärkten Kunststoffmaterials verbindenden Klebeabschnitt, insbesondere ein Klebeband bereit gestellt werden kann, welches beim Expandieren des Auskleidungsschlauchs 1 mittels Druckluft nachgibt, bzw. einreißt, so dass sich der innenliegende Außenfolienschlauch 40 radial frei aufdehnen kann.

In einer derartigen Art und Weise kann im Übrigen auch der Außenfolienschlauch 40 (bzw. die Schlauchaußenfolie) gestaltet werden, sofern dieser eben nicht erfindungsgemäß besonders dehnfähig ausgelegt ist. Auch in diesem Fall braucht es - wie obige Beispiele im Rahmen der Aufblastests am fertigen erfindungsgemäßen Auskleidungsschlauch gezeigt haben - entweder eine Dehnfuge oder eine Sollbruchstelle.

Die Erfindung betrifft weiterhin ein Verfahren zum Auskleiden eines defekten Kanalrohres 100, das nachfolgend mit Bezug auf die Darstellung von Fig. 3 näher beschrieben wird. Das Kanalrohr 100 umfasst einen ersten Rohrabschnitt 110 mit einem ersten Durchmesser und einen sich daran anschließenden zweiten Rohrabschnitt 120 mit einem erweiterten Durchmesser.

Um das defekte Kanalrohr 100 zu sanieren, wird ein zuvor beschriebener Auskleidungsschlauch 1 in das defekte Kanalrohr 100 eingezogen und die beiden Enden des Auskleidungsschlauchs 1 mit einem Packer 200 verschlossen. Im Anschluss daran wird der Auskleidungsschlauch 1 durch Einleiten eines Druckmediums, insbesondere Druckluft aus einer Druckluftquelle 6 in den Innenfolienschlauch 10 expandiert. Dadurch legt sich der Auskleidungsschlauch 1 im ersten Rohrabschnitt 110 unmittelbar an dessen Innenwand an. Im zweiten Rohrabschnitt 120 mit erweitertem Durchmesser weitet sich der Innenfolienschlauch 10 im Inneren des Kanalrohres 100 radial auf, wobei sich das Fasermaterial der Lage 20 durch Verschieben des oder der schraubenförmig gewickelten Faserbänder 22 ebenfalls radial mit aufweitet.

In einem letzten Verfahrensschritt wird das Reaktionsharz in der Lage 20 aus Fasermaterial in bekannter Weise durch Einbringen und Hindurchziehen einer nicht näher gezeigten Strahlungsquelle durch den Innenraum des Innenfolienschlauchs 10 ausgehärtet.

Das zuvor beschriebene Verfahren ist in analoger Weise zur Sanierung von Kanalrohren 100 mit einem konstanten Querschnitt einsetzbar, deren Durchmesser zwischen dem definierten Nenndurchmesser des Auskleidungsschlauchs 1 und dem maximalen Durchmesser liegt, auf den der erfindungsgemäße Innenfolienschlauch 10 und der darum angeordnete erfindungsgemäße Außenfolienschlauch aufdehnbar sind. Der Bereich, auf den der Durchmesser des erfindungsgemäßen Auskleidungsschlauchs 1 aufgedehnt werden kann, liegt in der Praxis bei maximal 160% bis 200% des Nenndurchmessers des Schlauchs, so dass ein Auskleidungsschlauch mit einem Nenndurchmesser DN von 30 cm (DN 300) beispielsweise zum Auskleiden von Kanalrohren mit Durchmessern zwischen ca. 33 cm und 90 cm (DN 900) einsetzbar ist, wenn davon ausgegangen wird, dass eine Mindestsaufdehnung von 10% erforderlich ist, um den Auskleidungsschlauch 1 zuverlässig zu expandieren und vollflächig an die Innenwand des Kanals 100 anzulegen.

Hierdurch lässt sich die Anzahl von vorzuhaltenden Durchmessern in vorteilhafter Weise erheblich reduzieren, was zu einer beachtlichen Verringerung der Lagerkosten und des Logistikaufwandes führt. Da anders ausgedrückt nur noch wenige Basisgrößen an Auskleidungsschläuchen gefertigt und vorgehalten werden müssen, verringern sich auch die nicht unbeachtlichen Rüstzeiten, die benötigt werden, um die Wickelvorrichtungen von einem Durchmesser auf einen anderen umzustellen. Außerdem erhöht sich dadurch die Flexibilität des Herstellers von Auskleidungsschläuchen bzw. von Schlauchlinern - man kann insbesondere Kundenanfragen gegenüber Marktbegleitern sehr viel schneller bedienen und verschafft sich dadurch einen erheblichen Marktvorteil.

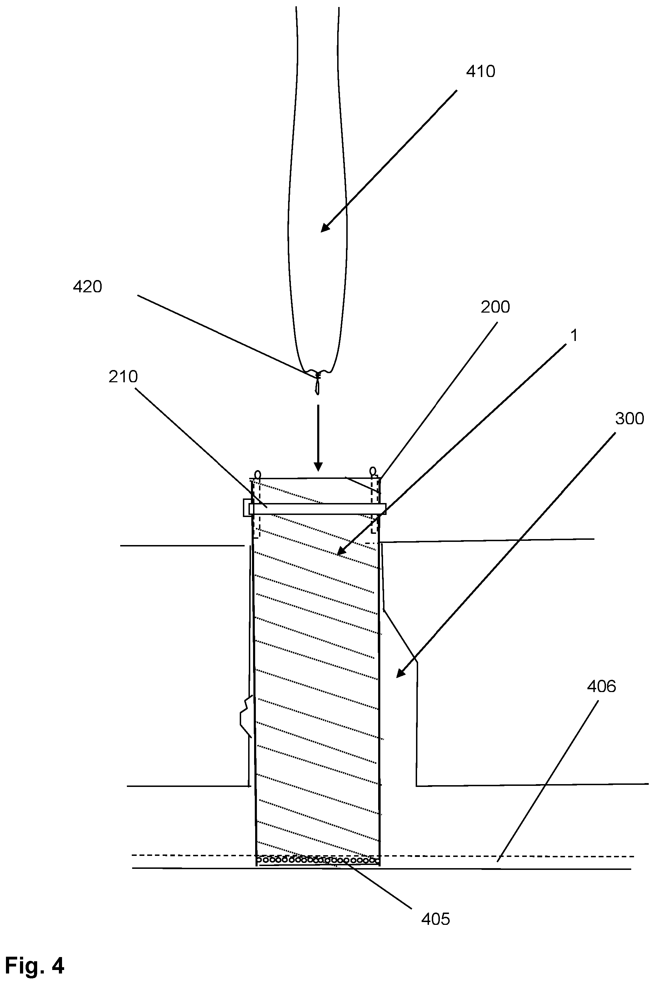

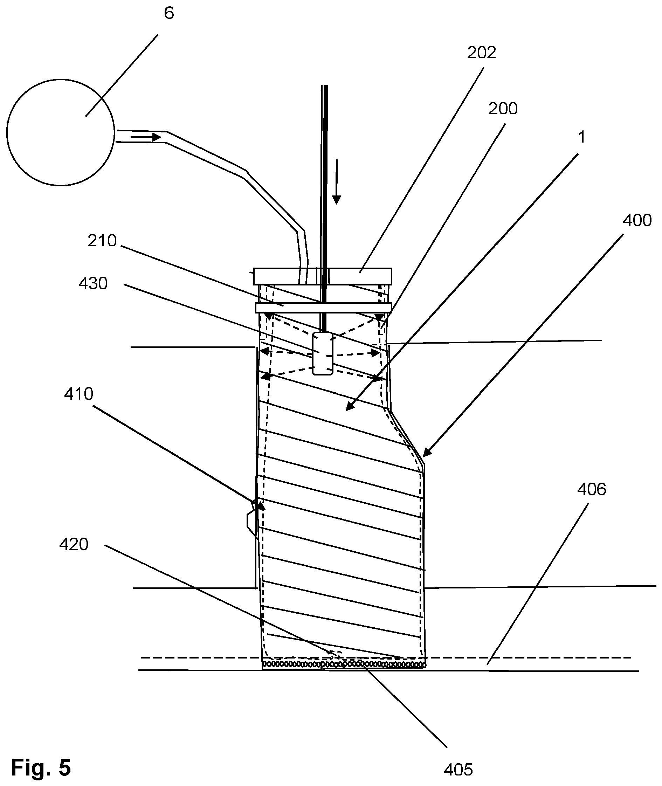

Nach einem weiteren der Erfindung zugrunde liegenden Gedanken lassen sich die erfindungsgemäßen Auskleidungsschläuche 1 ebenfalls zum Auskleiden eines defekten Kanalschachts 400 einsetzen, der in Fig. 4 und 5 dargestellt ist.

Hierzu wird zunächst das erste, in den Kanalschacht 400 einzuführende Ende des Auskleidungsschlauchs 1, insbesondere durch Vernähen oder Verklemmen oder Verkleben entlang einer Quernaht 405 verschlossen, wie dies in Fig. 4 angedeutet ist. Der in den Kanalschacht 400 einzuführende Auskleidungsschlauch 1 kann hierzu z.B. von einem als Meterware angelieferten längeren Auskleidungsschlauch 1 als Teilstück mit einer im Wesentlichen der Schachttiefe entsprechenden Länge abgetrennt werden. Dies ist gegenüber einer Einzelfertigung von wirtschaftlichem Vorteil, wenn z.B. mehrere Kanalschächte 400 in einer Straße nacheinander saniert werden sollen.

Im Anschluss daran wird das zweite Ende des Auskleidungsschlauchs 1 z.B. mittels eines Spanngurts 210 in bekannter Weise an einem Packer 200 befestigt, dieser durch eine Hebevorrichtung angehoben, und das erste, durch die Quernaht 405 verschlossene Ende des Auskleidungsschlauchs 1 in den zu sanierenden Kanalschacht 400 abgesenkt, wie dies in Fig. 4 angedeutet ist. Das Einführen des Auskleidungsschlauchs 1 durch die nicht näher gezeigte Hebeeinrichtung in den geöffneten Kanalschacht 400 erfolgt in vorteilhafter Weise in der Weise, dass sich die Quernaht 405 entlang der Rinne 406 am Boden des Kanalschachts 400 erstreckt, was es ermöglicht, auch den Boden des Kanalschachts, 400 die sogenannte Berme, in einem Arbeitsgang mit auszukleiden.

Danach wird von oben her ein an einem Ende bevorzugt durch einen Knoten 420 verschlossener Kalibriersack 410 in den Innenfolienschlauch 10 eingeführt, und dieser mit seinem oberen offenen Ende luftdicht mit dem Packer 200 verbunden. Dies kann z.B. dadurch erfolgen, dass der obere Rand des Kalibriersacks 410 über den Rand des Packers 200 geschlagen und der Packer 200 anschließend durch einen in Fig. 5 angedeuteten Deckel 202 verschlossen wird, durch den hindurch die Zufuhr des Druckgases aus der Druckgasquelle 6 erfolgt.

Im Anschluss daran wird der Kalibriersack 410 durch Einleiten eines Druckmediums, insbesondere Druckluft, in den Innenraum des Kalibriersacks 410 derart expandiert, dass sich der Auskleidungsschlauch 1, d.h. der erfindungsgemäße Innenfolienschlauch 10 und die darauf angeordnete Lage 20 aus Fasermaterial sowie ggf. ein die Außenseite des Auskleidungsschlauchs 1 umgebender (erfindungsgemäßer) Außenfolienschlauch 40 radial aufweiten und an die Innenwand des Kanalschachts 400 anlegen, wie dies in Fig. 5 angedeutet ist. Hierbei verschieben sich die überlappend schraubenförmig gewickelten oder alternativ auch überlappend gelegten Lagen 20 aus Fasermaterial relativ zueinander derart, dass sich der Außendurchmesser des Auskleidungsschlauchs 1 im unteren erweiterten Teil des Kanalschachts 400 und im oberen einstiegsseitigen Teil dem jeweiligen Innendurchmesser des Kanalschachts 400 anpasst. Demgegenüber dehnen sich der erfindungsgemäße Innenfolienschlauch 10 und auch der bevorzugt eingesetzte erfindungsgemäße Außenfolienschlauch 40 aufgrund ihrer außerordentlich hohen Dehnbarkeit in den jeweiligen Bereichen des Kanalschachts 400 unter einer Verringerung der Foliendicke lokal entsprechend dem jeweiligen Durchmesser auf.

Nachdem der Auskleidungsschlauch 1 vollständig aufgedehnt wurde, wird das Reaktionsharz in der Lage aus Fasermaterial 20 in bekannter Weise durch Einbringen einer UV-Strahlungsquelle 430 in den Innenraum des Kalibiersacks 410 ausgehärtet. Anstelle eines dazu eingesetzten, durch UV-Licht härtenden Reaktionsharzes, welches entsprechende Fotoinitiatoren enthält, die die polymere Vernetzungsreaktion des Harzes auslösen, kann alternativ ein thermisch aushärtbares Reaktionsharz eingesetzt werden. In diesem Falle erfolgt die Aushärtung durch Einleiten von erhitzter Luft oder erhitztem Wasser oder Heißdampf in den Kalibriersack 410.

Fig. 2 zeigt schließlich eine Wickelvorrichtung 300 zur Fertigung des erfindungsgemäßen Auskleidungsschlauchs 1. In dieser wird der Innenfolienschlauch 10 mit dem in Fig. 1 gezeigten Aufbau zunächst auf die Außenseite eines Wickelrohres 320 der Wickelvorrichtung 300 aufgestrippt, der bei der anschließenden Fertigung über im Bereich des Wickeldorns 330 angeordnete umlaufende Transportriemen 332 fortlaufend von diesem abgezogen wird. Das, bzw. die Faserbänder 22, werden, wie in Fig. 2 gezeigt, in bekannter Weise von einer Vorratsrolle abgezogen und schraubenförmig um die Außenseite des Innenfolienschlauchs 10 herumgewickelt, so dass eine geschlossene Lage aus Fasermaterial 20 entsteht. Auf diese wird anschließend ein für Styrol und bevorzugt auch für UV-Licht und kürzerwelliges sichtbares Licht undurchlässiger Außenfolienschlauch 40 sowie ggf. ein weiterer Außenfolienschlauch 50 aus reißfestem Werkstoff als geschlossene weitere Lagen aufgebracht, welche in Fig. 2 jedoch der Übersichtlichkeit wegen nur teilweise, bzw. nicht dargestellt sind.

### Bezugszeichenliste

- 1: Auskleidungsschlauch
- 6: Druckgasquelle
- 10: Innenfolienschlauch oder Schlauchinnenfolie
- 10.1: erste Lage des Innenfolienschlauchs mit mindestens 30 Gew.-% m-LLDPE (mindestens eine solche Schicht in der erfindungsgemäßen Schlauchinnenfolie)
- 10.2: - Verbindungslage bevorzugt aus Haftvermittler (mindestens eine solche Schicht in der erfindungsgemäßen Schlauchinnenfolie)
- 10.3: Mindestens eine PA-Schicht, die ein Polyblockamid das sowohl weiche elastische Segmente als auch steife, unflexible, harte Polyamid-Blöcke, enthält.
- 20: Lage aus Fasermaterial
- 22: Faserband
- 30: Längszugband
- 40: Außenfolienschlauch (Schlauchaußenfolie)
- 40.1: weitere erste Lage mit mindestens 30 Gew.-% m-LLDPE (mindestens eine solche Schicht in der erfindungsgemäßen Schlauchaußenfolie)
- 40.2: weitere mindestens eine Haftvermittler-Schicht
- 40.3: Mindestens eine PA-Schicht, die ein Polyblockamid, das sowohl weiche elastische Segmente als auch steife, unflexible, harte Polyamid-Blöcke, enthält.
- 40.4: zweite äußere Verbindunglage bevorzugt aus Haftvermittler
- 40.5: weitere Lage mit mindestens 30 Gew.-% m-LLDPE (mindestens eine solche Schicht in der erfindungsgemäßen Schlauchaußenfolie)
- 40.6: Lage aus Vliesmaterial, insbesondere PE-, PP- oder Polyestervlies oder alternativ Glasvlies, die der schlauchförmigen Lage aus Fasermaterial zugewandt ist und bevorzugt an dieser anliegt
- 50: weiterer Außenfolienschlauch aus verstärktem zugfestem Werkstoff, etwa einer LKW-Plane
- 52: Sollrissstelle
- 100: Kanalrohr
- 110: erster Rohrabschnitt
- 120: zweiter Rohrabschnitt
- 200: Packer
- 202: Deckel des Packers
- 210: Spanngurt
- 300: Wickelvorrichtung
- 310: Vorratsrolle für Längszugband
- 320: Wickelrohr
- 330: Wickeldorn
- 332: Transportriemen
- 400: Kanalschacht
- 405: Quernaht
- 406: Gerinne
- 410: Kalibriersack
- 420: Knoten
- 430: UV-Strahlungsquelle

## Patentansprüche

1. Auskleidungsschlauch zur Sanierung eines defekten Kanalrohres oder Kanalschachts, umfassend einen Innenfolienschlauch, eine um diesen herum angeordnete, mit einem härtbaren Reaktionsharz getränkte schlauchförmige Lage aus einem Trägermaterial, wobei der Innenfolienschlauch eine Mehrschichtenfolie aufweist, die mindestens eine Schicht aus einem oder mehreren Homo- oder Copolymeren von Polyolefinen und mindestens eine auf diese angeordnete Barriereschicht aus einem oder mehreren Homo- oder Co-Polyamiden umfasst,
**dadurch gekennzeichnet,**
**dass** die Barriereschicht aus einem oder mehreren Homo- oder Co-Polyamiden mindestens ein Polyblockamid enthält,
und / oder
**dass** die Schicht aus einem oder mehreren Homo- oder Copolymeren von Polyolefinen ganz oder teilweise mindestens ein Metallocen Linear Low Density Polyethylen (m-LLDPE) enthält,
wobei die Barriereschicht aus einem oder mehreren Homo- oder Copolymeren unmittelbar an der Lage aus einem Trägermaterial angeordnet ist.

2. Auskleidungsschlauch zur Sanierung eines defekten Kanalrohres oder Kanalschachts nach Anspruch 1,
**dadurch gekennzeichnet,**
**dass** die mindestens eine Schicht aus einem oder mehreren Homo- oder Copolymeren von Polyolefinen und mindestens eine auf diese angeordnete Barriereschicht aus einem oder mehreren Homo- oder Co-Polyamiden über mindestens eine Verbindungsschicht, insbesondere mindestens eine Schicht eines Haftvermittlers, miteinander verbunden sind.

3. Auskleidungsschlauch zur Sanierung eines defekten Kanalrohres oder Kanalschachts nach einem der vorhergehenden Ansprüche,
**dadurch gekennzeichnet,**
**dass** die Schicht aus einem oder mehreren Homo- oder Copolymeren von Polyolefinen zu mindestens 30 Gew. % Metallocen Linear Low Density Polyethylen (m-LLDPE) enthält.

4. Auskleidungsschlauch zur Sanierung eines defekten Kanalrohres oder Kanalschachts nach einem der vorhergehenden Ansprüche,
**dadurch gekennzeichnet,**
**dass** das Polyblockamid ein elastomeres Polyblockamid ist, insbesondere Polyetherblockamid (PEBA) ist.

5. Auskleidungsschlauch zur Sanierung eines defekten Kanalrohres oder Kanalschachts nach einem der vorhergehenden Ansprüche,
**dadurch gekennzeichnet,**
**dass** das Polyblockamid zu 0,1 bis 60,0 Gew.-% in der Barriereschicht enthalten ist.

6. Auskleidungsschlauch zur Sanierung eines defekten Kanalrohres oder Kanalschachts nach einem der vorhergehenden Ansprüche,
**dadurch gekennzeichnet,**
**dass** ein oder mehrere Homo- oder Co-Polyamide ausgewählt sind aus der Gruppe thermoplastische aliphatische, teilaromatische oder aromatische Homo- oder Copolyamide, solche wie aliphatische Diamine mit 2-10 Kohlenstoffatomen, insbesondere Hexamethylendiamin, aromatische Diamine mit 6-10 Kohlenstoffatomen, insbesondere p-Phenylendiamin und/oder aus aliphatischen Dicarbonsäuren, aromatischen Dicarbonsäuren mit 6-14 Kohlenstoffatomen, solche wie Adipinsäure, Terephthalsäure oder Isoterephthalsäure und/oder aus Lactamen mit 4-10 Kohlenstoffatomen, insbesondere aus ε-Caprolactam, Polyamide, wie PA 6, PA 11, PA 12, PA 66, PA 6,10, PA 6,12, PA 666, PA 6I, PA 6T oder entsprechende CoPolymere oder Mischungen aus mindestens zwei der genannten Polyamide verwendet werden.

7. Auskleidungsschlauch zur Sanierung eines defekten Kanalrohres oder Kanalschachts nach einem der vorhergehenden Ansprüche,
**dadurch gekennzeichnet,**
**dass** ein oder mehrere Homo- oder Copolymere von Polyolefinen ausgewählt sind aus der Gruppe thermoplastisches Olefin-Homo- oder Copolymer, solche wie α,β-ungesättigte Olefinen mit 2-10 Kohlenstoffatomen, Ethylen-Homopolymere (Polyethylene, PE), LDPE (Polyethylen hoher Dichte im Bereich von 0,86-0,93 g/cm³), LLDPE (Linear Low Density Polyethylene), HDPE (Polyethylen hoher Dichte im Bereich von 0,94 und 0,97 g/cm³), Propylen-Homopolymere (Polypropylene, PP), Butylen-Homopolymere (Polybutylene, PB), Isobutylen-Homopolymere (Polyisobutylene, PI) oder Mischungen aus mindestens zwei der genannten Polymere verwendet werden.

8. Auskleidungsschlauch nach einem der vorhergehenden Ansprüche,
**dadurch gekennzeichnet,**
**dass** die mit dem härtbaren Reaktionsharz getränkte schlauchförmige Lage aus Trägermaterial ausgewählt ist aus der Gruppe Glasfaser, Nonwoven, Vlies oder Faserband,
oder wenigstens ein schraubenförmig überlappend gewickeltes Faserband oder wenigstens ein sich in Längsrichtung des Auskleidungsschlauchs erstreckendes, an seinen Längsrändern überlappend gelegtes Faserband umfasst, welches um die mindestens eine Barrierelage herumgeführt ist und mit seiner Innenseite unmittelbar an der Barrierelage angeordnet ist.

9. Auskleidungsschlauch nach einem der vorhergehenden Ansprüche,
**dadurch gekennzeichnet,**
**dass** der Innenfolienschlauch für UV-Licht durchlässig ist und dass das Reaktionsharz ein durch Bestrahlen mit UV-Licht härtbares Harz ist, oder dass das Reaktionsharz ein durch Wärme härtbares Harz ist, und der Innenfolienschlauch dazu eingerichtet ist, zum Aushärten des Harzes mit erwärmtem Wasser, Heißdampf oder erhitzter Luft beaufschlagt zu werden.

10. Auskleidungsschlauch nach einem der vorhergehenden Ansprüche,
**dadurch gekennzeichnet,**
**dass** auf der Lage aus Trägermaterial ein sich in Längsrichtung des Auskleidungsschlauchs erstreckendes Längszugband angeordnet ist, welches in Längsrichtung des Auskleidungsschlauchs verlaufende Glasfasern und/oder Glasfaserrovinge enthält, die dazu eingerichtet sind, Axialkräfte beim Einziehen des Auskleidungsschlauchs in ein Kanalrohr oder einen Kanalschacht aufzunehmen und zu übertragen.

11. Verfahren zum Auskleiden eines defekten Kanalrohres,
**gekennzeichnet durch** die folgenden Verfahrensschritte:
Einziehen eines Auskleidungsschlauchs nach einem der vorhergehenden Ansprüche in ein defektes Kanalrohr, Verschließen der beiden Enden des Auskleidungsschlauchs mit einem Packer, Expandieren des Auskleidungsschlauchs **durch** Einleiten eines Druckmediums, insbesondere Druckluft, in den Innenfolienschlauch derart, dass sich der Auskleidungsschlauch radial aufweitet und mit seiner Außenseite an die Innenwand des Kanalrohrs anlegt, und Aushärten des Reaktionsharzes in der Lage aus Trägermaterial, insbesondere **durch** Einbringen einer Strahlungsquelle in den Innenraum des Innenfolienschlauchs.

12. Verfahren zum Auskleiden eines defekten Kanalschachts (400),
**gekennzeichnet durch** die folgenden Verfahrensschritte:
Verschließen eines ersten, in den Kanalschacht (400) einzuführenden Endes des Auskleidungsschlauchs (1), insbesondere **durch** Vernähen oder Verklemmen oder Verkleben entlang einer Quernaht (405),
Befestigen des zweiten Endes des Auskleidungsschlauchs an einem Packer (200), Einführen des ersten verschlossenen Endes des Auskleidungsschlauchs (1) in den zu sanierenden Kanalschacht (400),
Einführen eines an einem Ende insbesondere **durch** einen Knoten (420) verschlossenen Kalibriersacks (410) in den Innenfolienschlauch (10),
Expandieren des Kalibriersacks (410) **durch** Einleiten eines Druckmediums, insbesondere Druckluft, in den Innenraum des Kalibriersacks (410) derart, dass sich der Auskleidungsschlauch (1) radial aufweitet und mit seiner Außenseite an die Innenwand des Kanalschachts (400) anlegt, und Aushärten des Reaktionsharzes in der Lage aus Fasermaterial (20), insbesondere **durch** Einbringen einer Strahlungsquelle (430) in den Innenraum des Kalibiersacks (410).

13. Verwendung einer Mehrschichtenfolie umfassend mindestens eine Schicht aus einem oder mehreren Homo- oder Copolymeren von Polyolefinen und mindestens eine auf diese angeordnete Barriereschicht aus einem oder mehreren Homo- oder Co-Polyamiden,
wobei die Barriereschicht aus einem oder mehreren Homo- oder Co-Polyamiden mindestens ein Polyblockamid enthält,
und / oder
die Schicht aus einem oder mehreren Homo- oder Copolymeren von Polyolefinen ganz oder teilweise mindestens ein Metallocen Linear Low Density Polyethylen (m-LLDPE) enthält,
wobei die Barriereschicht aus einem oder mehreren Homo- oder Copolymeren zur unmittelbaren Anordnung an der Lage aus einem Trägermaterial eingerichtet ist, als Innenfolienschlauch in einem Auskleidungsschlauches nach einem der Ansprüche 1 bis 10.

14. Verwendung eines Auskleidungsschlauches nach einem der Ansprüche 1 bis 10 zur Sanierung eines defekten Kanalrohres oder Kanalschachts.
